# EUROPEAN PATENT APPLICATION

(11) **EP 4 708 921 A1**
(43) Date of publication of application: **11.03.2026**
(21) Application number: 24934799.8
(22) Date of filing: 09.10.2024
(51) Int. Cl.: H04R 25/00

(54) **WEARABLE DEVICE**

(30) Priority: 11.04.2024 CN 202410436619
(71) Applicant: Shenzhen Shokzhear Co., Ltd., Shenzhen, Guangdong 518000 (CN)
(72) Inventor: ZHOU, Weihua, Shenzhen, Guangdong 518108 (CN); WANG, Yueqiang, Shenzhen, Guangdong 518108 (CN)
(74) Representative: Wang, Bo
(86) International application number: PCT/CN2024/123777
(87) International publication number: WO 2025/213734

(57) **Abstract**

A wearable device includes a housing assembly and a movement assembly. The housing assembly includes a first housing and a second housing, the first housing being connected to the second housing to form an accommodating cavity between the first housing and the second housing; the movement assembly being provided in the accommodating cavity and including a first assembly and a second assembly in electrical connection with the first assembly, the first assembly being connected to the first housing, and the second assembly being connected to the second housing. By dispersedly connecting the movement assembly to the first housing and the second housing, the housing assembly may be designated as a structural mounting carrier of the movement assembly, not only reducing the number of related connecting parts but also making full use of the housing structure and space, which is conducive to the miniaturization and lightweight design of the device.

## Description

### CROSS-REFERENCE TO RELATED APPLICATIONS

The present disclosure claims priority to Chinese Application No. 202410436619.0, filed on April 11, 2024, the entire contents of which are hereby incorporated by reference.

### TECHNICAL FIELD

This application relates to the technical field of electronic devices, and specifically to a wearable device.

### BACKGROUND

Electronic devices have become indispensable tools in people's daily lives and work with continuous proliferation thereof, leading to increasingly high demands for performance of the electronic devices. In related technologies, the electronic devices such as in-ear or ear-hanging hearing aids, headphones, etc., comprise a main body that includes an external housing, an internal framework, and a variety of functional components. These functional components are assembled into a unified structure via the internal framework and then encapsulated by the external housing to form a complete electronic device. However, such structural designs often result in large size and heavy weight, which hinders the miniaturization and lightweight design of electronic devices.

### SUMMARY

The main technical problem solved by the present disclosure is to provide a wearable device capable of realizing lightweight and miniaturization.

One embodiment provides a wearable device. The wearable device may include a housing assembly and a movement assembly.

The housing assembly may include a first housing and a second housing. The first housing may be connected to the second housing to enclose an accommodating cavity between the first housing and the second housing.

The movement assembly may be provided in the accommodating cavity. The movement assembly may include a first assembly and a second assembly in electrical connection with the first assembly, the first assembly may be connected to the first housing, and the second assembly may be connected to the second housing.

In one embodiment, the first assembly may be connected to an inner wall of the first housing, and the second assembly may be connected to an inner wall of the second housing.

In one embodiment, the first housing may be a one-piece structure made of polyimide (PI), and/or the second housing may be a one-piece structure made of PI.

In one embodiment, the first housing may be provided with a package assembly between the first housing and the second housing, and the package assembly may be configured to fix the first housing and the second housing.

In one embodiment, the package assembly may include a first fixing structure. The first fixing structure may include a support arm and a fixing pin. One of the first housing and the second housing may be a one-piece structure with the support arm, and the fixing pin may be provided through another of the first housing and the second housing to fix the first housing and the second housing.

The package assembly may include a first positioning structure, and the first positioning structure may include a first positioning protrusion and a first positioning groove. One of the first housing and the second housing may be a one-piece structure with the first positioning protrusion, and the first positioning groove may be formed in another of the first housing and the second housing. The first positioning protrusion may be aligned and inserted in the first positioning groove to limit a relative position of the first housing to the second housing.

In one embodiment, the package assembly may include the first fixing structure and the first positioning structure, the housing assembly may include a first end and a second end that are opposite to each other in a first direction, the first fixing structure may be located on the first end of the housing assembly, and the first positioning structure may be located on the second end of the housing assembly.

In one embodiment, the first housing and the second housing may be opposite to each other in a second direction. The support arm may protrude out of a side of the second housing facing the first housing, the fixing pin may be provided through the first housing and the support arm in a third direction, and the first positioning protrusion may protrude out of a side of the first housing facing the second housing. Any two of the first direction, the second direction, and the third direction may intersect with each other.

In one embodiment, a surface where the first housing connects against the second housing may be a joint surface, a first limiting structure may be provided between a joint surface of the first housing and a joint surface of the second housing, and the first limiting structure may be configured to limit the first housing and/or the second housing from deforming.

In one embodiment, the joint surface of the first housing and the joint surface of the second housing may contact against each other in a second direction, and the first limiting structure may include a first limiting flange and a second limiting flange.

The first limiting flange may protrude out of the joint surface of the first housing towards a side where the second housing is located, and the second limiting flange may protrude out of the joint surface of the second housing towards a side where the first housing is located. The first limiting flange and the second limiting flange may abut against each other in a third direction to limit deformation of the first housing or the second housing in the third direction. The second direction and the third direction may intersect.

In one embodiment, the first limiting flange may be located on a side of the second limiting flange that is opposite to the accommodating cavity in the third direction, and the second limiting flange may be provided with an avoidance structure configured to avoid the movement assembly.

The first limiting flange may be located on a side of the second limiting flange facing the accommodating cavity in the third direction, and the first limiting flange may be provided with an avoidance structure configured to avoid the movement assembly.

In one embodiment, the wearable device may further include a plurality of the first limiting structures, and the plurality of the first limiting structures may be provided on two opposite sides of the accommodating cavity.

In one embodiment, the first assembly may include a microphone assembly and a control board assembly, and the microphone assembly and the second assembly may be electrically connected to the control board assembly, respectively. The microphone assembly may be fixedly connected to an inner wall of the first housing for picking up an external sound signal from the housing assembly, and the control board assembly may be fixedly connected to the inner wall of the first housing for receiving the external sound signal picked up by the microphone assembly.

In one embodiment, the microphone assembly may include a first circuit board, the control board assembly may include a second circuit board, an end of the first circuit board in a length direction may be fixedly connected to the inner wall of the first housing, and another end of the first circuit board in the length direction may be fixedly connected to the second circuit board. The second circuit board may be fixedly connected to the inner wall of the first housing, and a material hardness of the first circuit board may be less than a material hardness of the second circuit board.

In one embodiment, the microphone assembly may include a microphone electrically connected to the control board assembly, and the first housing may include a sound pickup hole, the sound pickup hole connects the accommodating cavity to an exterior of the housing assembly. The microphone may be in sealed communication with the sound pickup hole to pick up the external sound signal input through the sound pickup hole.

In one embodiment, the first assembly may further include a button assembly. The button assembly may be movably connected to the inner wall of the first housing by at least partially exposing to the housing assembly. The button assembly may be configured to cooperate with the control panel assembly to input a preset command.

In one embodiment, the first housing may include a button window, and the button window may connect the accommodating cavity to an exterior of the housing assembly. The button assembly may include an operating button. The operating button may be movably connected to the inner wall of the first housing by at least a portion of the button window protruding out of the first housing. The control board assembly may be located on a side of the operating button that is opposite to the button window to cooperate with the operating button to input the preset command.

In one embodiment, each of the operating button, the first housing, and the second housing may be a one-piece structure made of PI.

In one embodiment, the second assembly may include a battery assembly and/or an interface assembly. The battery assembly may be connected to an inner wall of the second housing and electrically connected to the first assembly for supplying power, and the interface assembly may be fixedly connected to the inner wall of the second housing and electrically connected to the first assembly for connecting to an external device.

In one embodiment, the battery assembly may include a battery bracket for accommodating a battery, the second housing may include a battery window, and the battery window may connect the accommodating cavity and an exterior of the housing assembly. The battery bracket may be movably connected to the inner wall of the second housing to enable the battery bracket to close and open the battery window.

In one embodiment, each of the battery bracket, the first housing, and the second housing may be a one-piece structure made of PI.

In one embodiment, the interface assembly may include an interface member and a fixing member, the second housing and/or the first housing may include a connection port that connects the accommodating cavity to the exterior of the housing assembly. The interface member may be arranged in the accommodating cavity by directly opposite to the connection port for connecting to the external device. The fixing member may be in fit connection with the inner wall of the second housing to fix the interface member in the accommodating cavity.

In one embodiment, each of the fixing member, the first housing, and the second housing may be a one-piece structure made of PI.

In one embodiment, the first assembly may include a microphone assembly, a control board assembly, and a button assembly. The second assembly may include a battery assembly and an interface assembly. The microphone assembly, the interface assembly, and the battery assembly may be electrically connected to the control board assembly, respectively.

The housing assembly may include a first side wall, a second side wall, a third side wall, a fourth side wall, a fifth side wall, and a sixth side wall enclosing the accommodating cavity. The first side wall and the second side wall may be opposite to each other in the first direction. The third side wall and the fourth side wall may be opposite to each other in the second direction and may connect between the first side wall and the second side wall. The fifth side wall and the sixth side wall may be opposite to each other in the third direction and may connect between the first side wall, the second side wall, the third side wall, and the fourth side wall. The first direction, the second direction, and the third direction may intersect with each other.

The microphone assembly and the control board assembly may be arranged side by side along the first direction. The microphone assembly and the control board assembly may be fixed to the third side wall, respectively. The microphone assembly may be configured to pick up a sound signal from an exterior of the housing assembly. The control board assembly may be configured to receive the sound signal picked up by the microphone assembly. The button assembly may be movably connected to the first housing by at least partially exposing to the first housing. The button assembly may be located on a side of the control board assembly facing the third side wall in the second direction. The button assembly and the control board assembly may cooperate to input a preset command.

The interface assembly may be configured to connect to an external device. The interface assembly may be fixed to the fourth side wall and exposed to the second housing from at least one of the fifth side wall, the sixth side wall, or the first side wall. The battery assembly may be configured to supply power. The battery assembly may be movably connected to the second housing and may enter and exit the accommodating cavity at a position of the fourth side wall close to the second side wall in the first direction.

In one embodiment, the first assembly may include two microphone assemblies, the two microphone assemblies may be spaced apart in the first direction, and the button assembly and the control board assembly may be located between the two microphone assemblies in the first direction.

In one embodiment, the third side wall may be a curved structure protruding toward the exterior of the housing assembly in the second direction, and the third side wall may include a preset length in the first direction. The third side wall may be provided with a button window and two sound pickup holes, and the button window may be located between the two sound pickup holes in the first direction.

The two sound pickup holes may correspond one-to-one with and may be in sealed communication with sound inlet ends of the two microphone assemblies. The button assembly may be rotationally connected to the first housing, and one of two ends of the button assembly that are opposite to each other in the first direction may protrude out of the first housing via the button window.

In one embodiment, the second assembly may include a plurality of interface assemblies, and the plurality of interface assemblies may include a first interface assembly and a second interface assembly.

The first side wall may be provided with a first connection port connecting the accommodating cavity and the exterior of the housing assembly. The first interface assembly may be fixed to the fourth side wall by facing the first connection port in the first direction for connecting an in-ear speaker.

The fifth side wall or the sixth side wall may be provided with a second connection port connecting the accommodating cavity and the exterior of the housing assembly. The second interface assembly may be fixed to the fourth side wall by facing the second connection port in the third direction for connecting an external regulating device.

In one embodiment, the wearable device may further include an in-ear speaker. The in-ear speaker may include a speaker assembly and a wearable assembly. An end of the wearable assembly may pass through the first connection port to be connected to the first interface assembly, and another end of the wearable assembly may be connected to the speaker assembly. The wearable assembly may be configured to hook the housing assembly to an ear of a user to allow the speaker assembly to be inserted into an ear canal of the user.

In one embodiment, a dimension of the housing assembly in the first direction may be greater than a dimension of the housing assembly in the second direction and a dimension of the housing assembly in the third direction, and a geometric centerline of the housing assembly in the first direction may be an arcuate segment.

In one embodiment, the dimension of the housing assembly in the third direction may progressively decrease from a side where the second side wall is located toward a side where the first side wall is located.

In one embodiment, the wearable device may further include an in-ear speaker, the in-ear speaker may include a speaker assembly and a wearable assembly, and the wearable assembly may be connected between the housing assembly and the speaker assembly.

The housing assembly may be worn between a dorsal side of an ear of a user and the head of the user, and the speaker assembly is capable of being inserted in an ear canal of the user.

In one embodiment, the wearable device may be an air-conduction hearing aid.

The wearable device, according to the above embodiments, includes a housing assembly and a movement assembly. The housing assembly includes a first housing and a second housing. The first housing and the second housing cooperate with each other to enclose an accommodating cavity between the first housing and the second housing. The movement assembly is provided in the accommodating cavity, the movement assembly includes a first assembly and a second assembly in electrical connection with the first assembly, the first assembly is connected to the first housing, and the second assembly is connected to the second housing. By dispersedly connecting the movement assembly to the first housing and the second housing, the housing assembly may be designated as a structural mounting carrier of the movement assembly, not only reducing the number of related connecting parts but also making full use of the housing structure and space, which is conducive to the miniaturization and lightweight design of the device.

### BRIEF DESCRIPTION OF THE DRAWINGS

FIG. 1 is a schematic diagram illustrating an exemplary wearable device according to an embodiment of the present disclosure;
FIG. 2 is a schematic diagram illustrating a cross-sectional structure (I) of a wearable device according to an embodiment of the present disclosure;
FIG. 3 is a schematic diagram illustrating a structural decomposition of a wearable device according to an embodiment of the present disclosure;
FIG. 4 shows a schematic diagram illustrating a cross-sectional structure (II) of a wearable device according to an embodiment of the present disclosure;
FIG. 5 is a schematic diagram illustrating a structural decomposition of a housing assembly of a wearable device according to an embodiment of the present disclosure;
FIG. 6 is a schematic diagram illustrating an exemplary second housing of a wearable device according to an embodiment of the present disclosure;
FIG. 7 is a schematic diagram illustrating an exemplary first housing of a wearable device according to an embodiment of the present disclosure;
FIG. 8 is a schematic diagram illustrating a structural arrangement relationship of a first assembly of a wearable device according to an embodiment of the present disclosure;
FIG. 9 is a schematic diagram illustrating a cross-sectional structure of a wearable device in a region of a microphone assembly according to an embodiment of the present disclosure;
FIG. 10 is a schematic diagram illustrating a structural decomposition of a first assembly of a wearable device according to an embodiment of the present disclosure;
FIG. 11 is a schematic diagram illustrating a relationship between a button assembly and a control board assembly of a wearable device according to an embodiment of the present disclosure;
FIG. 12 is a schematic diagram illustrating a structural assembly of an interface assembly of a wearable device according to an embodiment of the present disclosure;
FIG. 13 is a schematic diagram illustrating a structural decomposition of a first interface assembly of a wearable device according to an embodiment of the present disclosure;
FIG. 14 is a schematic diagram illustrating a structural decomposition of a second interface assembly of a wearable device according to an embodiment of the present disclosure; and
FIG. 15 is a schematic diagram illustrating a relationship between a battery assembly and a housing assembly of a wearable device according to an embodiment of the present disclosure.

### Reference signs:

100, housing assembly; 100a, accommodating cavity; 110, first housing; 110a, first housing wall; 110b, second housing wall; 110c, third housing wall; 110d, fourth housing wall; 110e, fifth housing wall; 110f, sound pickup hole; 110g, button window; 120, second housing; 120a, sixth housing wall; 120b, seventh housing wall; 120c, eighth housing wall; 120d, ninth housing wall; 120e, tenth housing wall; 120f, first connection port; 120g, second connection port; 120h, battery window;
131, support arm; 132, fixing pin; 141, first positioning protrusion; 142, first positioning groove; 140, fourth fixing structure; 150, fifth fixing structure; 151, fixing retaining wall; 161, support post; 171, first limiting flange; 172, second limiting flange; 173, second avoidance notch; 181, pivot protrusion;
200, control board assembly; 210, second circuit board; 210a, positioning through-hole; 220, first switch; 230, second switch; 300, microphone assembly; 310, first circuit board; 310a, sound guiding hole; 320, microphone; 330, protective mesh;
400, button assembly; 410, operating button; 420, pivot groove; 440, button protrusion; 500, first interface assembly; 510, first interface member; 520, first fixing member; 600, second interface assembly; 610, second interface member; 620, second fixing member; 630, sealing member; 700, battery assembly; 710, battery bracket; 720, electrode elastic piece; 730, battery; 750, second pivot structure; 160, locking structure 160; 810, speaker assembly; 820, wearable assembly.

### DETAILED DESCRIPTION

The present disclosure is described in further detail below by way of specific embodiments in conjunction with the accompanying drawings. Similar components in different embodiments adopt associated similar component labeling. In the following embodiments, many of the details are described to enable the present disclosure to be better understood. However, a person skilled in art may have no trouble recognizing that some of these features can be omitted in various embodiments or can be replaced by other components, materials, or methods. In some cases, some of the operations related to the present disclosure are not shown or described in the present disclosure, to avoid the core of the present disclosure from being overwhelmed by an excessive amount of description. To a person skilled in the art, the detailed description of these related operations is not necessary, and they can fully understand the related operations according to the description in the present disclosure and the general technical knowledge in the field.

In addition, the features, operations, or characteristics described in the present disclosure may be combined in any appropriate manner to form various embodiments. Meanwhile, various steps or actions in the description of the method may be switched or adjusted in order in a manner that would be apparent to a person skilled in the art. The various sequences in the present disclosure and the accompanying drawings are therefore only intended to clearly describe a particular embodiment, and do not purport to be a required sequence unless otherwise indicated that one of the sequences must be followed.

The serial numbers themselves, such as "first," "second", etc., are used herein for the purpose of distinguishing only the objects described and have no sequential or technical meaning. The terms "connection," and "coupling" in the present disclosure include direct and indirect connections (couplings) unless otherwise specified.

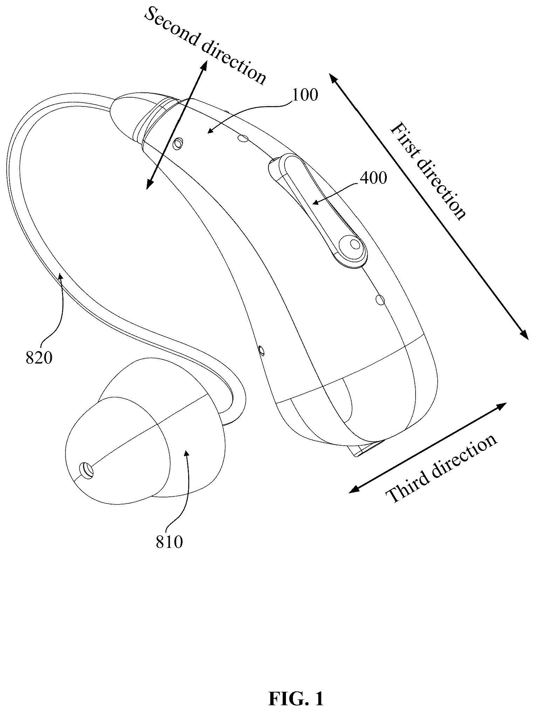

The present disclosure provides a wearable device, for example, FIG. 1 shows an overall outline structure of an in-ear hearing aid, which may be a specific embodiment of the practical application of the wearable device. The wearable device includes a housing assembly 100, a movement assembly, a speaker apparatus, and other functional components present as needed, as specified below.

The movement assembly may be understood as a collection of related components for realizing main functions of the wearable device. For example, the movement assembly is configured to acquire a sound signal, convert and process an electrical signal, switch on and off the wearable device, adjust a volume, supply power, etc. The movement assembly is provided in the housing assembly 100 to be built in combination with the housing assembly 100 to form a complete functional structural body. In order to facilitate differentiation and description, a combined structure of the housing assembly 100 and the movement assembly is defined as a main body of the wearable device.

The speaker apparatus may be understood as a collection of related components that realize a function of playing the sound signal of the wearable device. In some embodiments, the speaker apparatus is connected with the main body of the wearable device. For example, the speaker apparatus is connected to an exterior of the housing assembly 100.

Exemplarily, referring to FIG. 1, the speaker apparatus is an in-ear speaker including a speaker assembly 810 and a wearable assembly 820. The speaker assembly 810 is provided in the form of a structure that can be adaptably inserted into the ear canal of a user and mainly serves to play sound to the user. The wearable assembly 820 is connected between the speaker assembly 810 and the housing assembly 100 by electrically connecting the speaker assembly 810 and the movement assembly, and is mainly configured to establish a signaling connection relationship between the movement assembly and the speaker assembly 810.

The wearable assembly 820 may be made of a flexible cable with a signaling function, or the wearable assembly 820 may be made of other wires with both a signaling function and a shape memory function. One end of the wearable assembly 820 is fixed and electrically connected to the speaker assembly 810, and the other end of the wearable assembly 820 may be connected to the housing assembly 100 in a removable or non-removable manner and electrically connected to the movement assembly.

With the help of the wearable assembly 820, the main body of the wearable device may also be stably worn in the ear of the user, and the speaker assembly 810 may be inserted into the ear canal of the user. The main body of the wearable device (specifically, the movement assembly) may collect an external sound signal. By converting the sound signal into an electrical signal and outputting the electrical signal to the speaker assembly 810, the speaker assembly 810 may be used to play a corresponding sound signal, to realize the hearing aid function of the wearable device.

In some other embodiments, the speaker apparatus may also be configured in other forms in the wearable device (e.g., with reference to the movement assembly being directly provided in an interior or exterior of the housing assembly 100) to form a wearable device having different structural forms or different functions. In other words, by selectively configuring the speaker apparatus, the main body of the wearable device, and the structural relationship between the speaker apparatus and the main body , other structural forms of hearing aids or other types of wearable devices, such as headphones or eyeglasses, may also be constructed.

It is to be understood that when the wearable device is in an energized state, it is possible to realize the conversion between the sound signal (e.g., a mechanical vibration signal) and the electrical signal through the cooperation of the movement assembly and the speaker apparatus to facilitate the user to hear the sound through the ear. Generally speaking, the mechanical vibration is air conduction-based and acts on a tympanic membrane of the user mainly through the air as a medium, and then acts on an auditory nerve. The mechanical vibration is also bone conduction-based and acts directly on the auditory nerve through the user's bones and tissues as a medium. For the sound heard by the user, the former may be referred to as an air-conducted sound, and the latter may be abbreviated as a bone-conducted sound.

Based on this, by selecting and configuring the specific functional structures of the movement assembly and the speaker apparatus, the wearable device may form both the air-conducted sound and the bone-conducted sound, and may also realize both the air-conducted sound and the bone-conducted sound.

The following is a description of the main body of the wearable device and its related structures, mainly using the wearable device as an example of an air-conduction hearing aid, and other components of the wearable device (e.g., the speaker apparatus) may be referred to the prior art. However, it should be noted that the wearable device may also be other devices, such as headphones, glasses, or the like.

For more clear and detailed description of the structural configuration of the main body of the wearable device, based on an outer contour form of the main body of the wearable device, three directions (e.g., a first direction, a second direction, and a third direction) intersecting or perpendicular to each other are defined herein.

Exemplarily, when the wearable device is in a naturally placed state, the first direction refers to a length direction of the whole wearable device, the second direction refers to a thickness direction of the whole wearable device, and the third direction refers to a width direction of the whole wearable device.

Exemplarily, in a state in which the wearable device is normally worn between a dorsal side of the ear and the head, with the user as a reference frame, the first direction refers to an up-down direction of the user, the second direction refers to a front-back direction of the user, and the third direction refers to a left-right direction of the user.

In one embodiment, referring to FIGs. 1 to 7, the housing assembly 100 includes a first housing 110 and a second housing 120. The first housing 110 and the second housing 120 are opposite to each other and cooperatively connected to each other to form an accommodating cavity 100a in the interior of the housing assembly 100 (or between the first housing 110 and the second housing 120). The movement assembly is arranged within the accommodating cavity 100a. At least a portion of the movement assembly 100 is connected to the first housing 110, and at least another portion of the movement assembly 100 is connected to the second housing 120.

Exemplarily, the movement assembly includes a control board assembly 200, a microphone assembly 300, a button assembly 400, a first interface assembly 500, a second interface assembly 600, and a battery assembly 700. For ease of distinguishing and describing, the movement assembly in which the functional member connected to the first housing 110 is defined as a first assembly, and the functional member connected to the second housing 120 in the movement assembly is defined as a second assembly. The first assembly may include the control board assembly 200, the microphone assembly 300, and the button assembly 400. The second assembly may include the first interface assembly 500, the second interface assembly 600, and the battery assembly 700.

The microphone assembly 300 is electrically connected to the control board assembly 200 and fixed to the first housing 110, respectively. The microphone assembly 300 is mainly configured to collect the sound signal outside the wearable device (specifically outside the housing assembly 100). For example, the mechanical vibration of the relevant parts of the microphone assembly 300 is triggered due to a sound of an external environment, thus enabling the microphone assembly 300 to realize the acquisition of the sound signal.

The control board assembly 200 mainly plays a role in regulating and managing the wearable device. For example, the control board assembly 200 may receive the sound signal collected by the microphone assembly 300, and then convert the sound signal into electrical signal to be output to the speaker apparatus (specifically, the speaker assembly 810), to play the sound signal to the user with the aid of the speaker apparatus.

The button assembly 400 is movably connected to the first housing 110 and cooperatively arranged with the control board assembly 200. Through the cooperation between the button assembly 400 and the control board assembly 200, input of a preset command may be realized. For example, through the button assembly 400, a command for controlling the wearable device to turn on and off, a command for volume adjustment, or other commands to the control board assembly 200 may be input.

The first interface assembly 500, the second interface assembly 600, and the battery assembly 700 are connected to the second housing 120 and electrically connected to the control board assembly 200 (e.g., in an electrical signal connection relationship with the control board assembly 200 via a wire assembly). The first interface assembly 500 primarily serves to connect the speaker apparatus in the main body of the wearable device. For example, the first interface assembly 500 may be detachably connected to the wearable assembly 820 in a pluggable manner, thereby establishing a signal connection relationship between the speaker assembly 810 and the control board assembly 200 so that the speaker assembly 810 can generate or play a sound signal in response to the electrical signal provided by the control board assembly 200.

The second interface assembly 600 is mainly configured to connect an external regulating device (e.g., a cell phone, a computer, etc.) to perform data transmission between the external regulating device and the wearable device. Exemplarily, a working mode, working parameters, a volume level, etc., of the wearable device may be adaptively adjusted according to the user's needs by the external regulating device. The battery assembly 700 is primarily configured to power the electricity-using components in the wearable device in order to provide support for the normal operation of the wearable device.

In some embodiments, other functional components may be added to the movement assembly, or some of the functional components may be omitted. For example, by omitting the first interface component 500, the speaker assembly 810 may be directly connected to the control board assembly 200 through the wearable component 820. As another example, the second interface assembly 600 is replaced with a wireless communication module, with the aid of which data is transmitted between the wearable device and the external regulating device.

In other words, the movement assembly may include one or more of the control board assembly 200, the microphone assembly 300, the button assembly 400, the first interface assembly 500, the second interface assembly 600, and the battery component 700.

In some embodiments, based on the form of the structure inside the housing assembly 100, the functional components in the first assembly and the second assembly may also be set up interchangeably with each other. For example, the first interface component 500 is subordinate to the first assembly and is connected to the first housing 110

That is to say, the control board assembly 200, the microphone assembly 300, the button assembly 400, the first interface assembly 500, the second interface assembly 600, and the battery assembly 700, etc., may be selectively configured in in either the first housing 110 or the second housing 120 according to the structure, layout, and functional configuration of the housing assembly 100 or the main body of the wearable device.

It should be noted that the description of the "wire assembly" is introduced herein, and the wire assembly may be a wire, a row of wires, a flexible circuit board (a flexible printed circuit (FPC)), etc., to adapt to the internal structure of the housing assembly 100 and the spatial arrangement relationship between the relevant functional components, thereby flexibly establishing electrical connections among these functional components.

Based on this, with the first housing 110 and the second housing 120 serving as mounting carriers for a plurality of functional components within the wearable device, the movement assembly may be dispersedly provided in different parts of the housing assembly 100.

On the one hand, compared to the related technology, which adopts an internal skeleton independent of the housing assembly 100 as a mounting carrier for the movement assembly, the present disclosure may realize the full utilization of the structure and space of the housing and reduce the number of components inside the device, thereby facilitating the miniaturization and lightweight design of the wearable device.

On the other hand, based on the structural form of the decentralized installation of the movement assembly, the wearable device is quickly disassembled and assembled. And also, by disassembling and assembling the first housing 110 and the second housing 120, the first assembly and the second assembly may be disassembled, assembled, maintained, recycled and reused, etc., in a targeted manner.

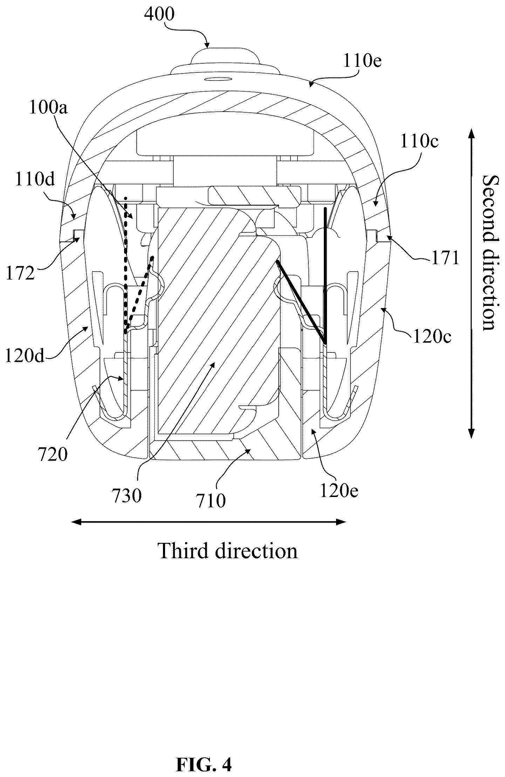

In one embodiment, referring to FIG. 4-FIG. 7, both the first housing 110 and the second housing 120 have housing structures with openings. The first housing 110 and the second housing 120 are cooperatively connected in the second direction with the openings opposite each other to form the accommodating cavity 100a.

In the case of the movement assembly, the first assembly (e.g., the control board assembly 200, the microphone assembly 300, the button assembly 400, etc.) is connected to an inner wall of the first housing 110 such that at least a portion of the first assembly is accommodated within the housing space of the first housing 110. The second assembly (e.g., the first interface assembly 500, the second interface assembly 600, the battery assembly 700, etc.) is connected to an inner wall of the second housing 120 such that at least a portion of the second assembly is accommodated within the housing space of the second housing 120.

Firstly, by connecting the first assembly to the inner wall of the first housing 110 and the second assembly to the inner wall of the second housing 120, it is possible to prevent the connecting structure between the movement assembly and the housing assembly 100 from being exposed in the housing assembly 100 and cause damage to the appearance of the main body of the wearable device, enhancing the aesthetic appearance of the main body of the wearable device, as well as the wearability.

Secondly, utilizing the housing space of the first housing 110 and the second housing 120 to accommodate the first assembly and the second assembly provides a certain protective effect, preventing the first assembly or the second assembly from being damaged due to bumping before assembling and molding the housing assembly 100.

Thirdly, by setting the first housing 110 and the second housing 120 as a housing structure with a certain volume space and an opening, it is convenient to assemble and mold the first housing 110 with the first assembly and the second housing 120 with the second assembly, respectively. The assembly of the main body of the wearable device may be easily and quickly completed after the wiring of the wire assembly is completed.

In some embodiments, the first housing 110 may be of a housing structure with an opening, and the second housing 120 may be of a cover structure. The second housing 120 is provided in the first housing 110 by sealing the opening of the first housing 110 to enclose the accommodating cavity 100a with the first housing 110. With respect to the movement assembly, the first assembly is connected to the inner wall of the first housing 110 and is accommodated in the housing space of the first housing 110. The second assembly is connected to the side of the second housing 120 that faces the first housing 110. The second assembly is equivalent to being accommodated in the housing space (e.g., the accommodating cavity 100a) of the first housing 110 after the combination of the first housing 110 and the second housing 120. Certainly, the first housing 110 may adopt a cover structure, while the second housing 120 adopts a housing structure with an opening.

Therefore, the housing assembly 100 is formed by the combination of the housing structure and the cover structure, which is not only conducive to realizing the rapid assembly of the main body of the wearable device, but also allows for the formation of different structural forms or assembling modes of the wearable device, thereby satisfying different application requirements.

In one embodiment, referring to FIGs. 4-7, an assembly structure is provided between the first housing 110 and the second housing 120. The assembly structure is mainly configured to fix the first housing 110 that is provided with the first assembly and the second housing 120 that is provided with the second assembly into a single unit, so as to roughly form a complete outer contour structure of the main body of the wearable device (e.g., the housing assembly 100). Thus, with the help of the housing assembly 100, the wearable device or the main body of the wearable device may be moved, carried, worn, operated, and used.

The assembly structure may adopt different structures according to the connection form between the first housing 110 and the second housing 120. For example, the assembly structure may be a relevant structure adapted to realize the connection form, such as gluing, welding, etc., between the first housing 110 and the second housing 120. As another example, the assembly structure may be a structure suitable for realizing a detachable connection, such as snap-fit, lock-fit, or the like, between the first housing 110 and the second housing 120.

Exemplarily, referring to FIG. 4-FIG. 7, the assembly structure includes a first fixing structure and a first positioning structure. The first fixing structure is mainly configured to fix the first housing 110 and the second housing 120 firmly into a single unit. The first positioning structure is mainly configured to locate the relative position between the first housing 110 and the second housing 120, to provide support for fast and accurate assembly of the first housing 110 and the second housing 120, and at the same time to enhance the structural combination strength between the first housing 110 and the second housing 120 in conjunction with the first fixing structure.

The first fixing structure includes a support arm 131 and a fixing pin 132. The support arm 131 protrudes out of an inner wall of the second housing 120. For example, the support arm 131 is of a one-piece structure with the second housing 120. The fixing pin 132 cooperates with the support arm 131.

The first positioning structure includes a first positioning protrusion 141 and a first positioning groove 142. The first positioning protrusion 141 protrudes out of the inner wall of the first housing 110, and the first positioning protrusion 141 and the first housing 110 are a one-piece structure. The first positioning groove 142 is integrally formed at a position of the second housing 120 corresponding to the first positioning protrusion 141.

In the process of assembling the first housing 110 and the second housing 120 to form the housing assembly 100, the first positioning protrusion 141 may be inserted into the first positioning groove 142 in advance by means of an alignment relationship between the first positioning protrusion 141 and the first positioning groove 142, so that the relative positions of the first housing 110 and the second housing 120 are defined. For example, an end surface of the opening of the first housing 110 abuts against an end surface of the opening of the second housing 120, so that the first space and the second space are connected to form the accommodating cavity 100a (at this time, the support arm 131 is located in the accommodating cavity 100a).

Afterwards, the fixing pin 132 is threaded into the interior of the housing assembly 100 from the exterior of the housing assembly 100 through the position of the first housing 110 corresponding to the support arm 131 (e.g., a pin hole structure may be provided at the position of the first housing 110 corresponding to the support arm 131), so as to thread and fix the first housing 110 and the support arm 131 into a single unit, ultimately realizing the detachable assembly fixing between the first housing 110 and the second housing 120.

In some embodiments, the support arm 131 and the fixing pin 132, the first positioning protrusion 141, and the first positioning groove 142 may also be positionally switched. For example, the support arm 131 protrudes out of the inner wall of the first housing 110, and the first positioning protrusion 141 protrudes out of the inner wall of the second housing 120.

With the cooperation of the first fixing structure and the first positioning structure, the assembly and fixing of the first housing 110 and the second housing 120 may be realized easily, quickly and accurately, to effectively enhance the structural solidity of the housing assembly 100 (or the outer shell of the device), and also to provide structural support for the disassembling and assembling of the main body of the wearable device or the housing assembly 100.

For example, in the process of assembling the main body of the wearable device or the housing assembly 100, the first positioning protrusion 141 may be first inserted into the corresponding first positioning groove 142, and the fixing pin 132 is then inserted using a cooperation relationship between the support arm 131 and the fixing pin 132, to finally assemble and fix the first housing 110 and the second housing 120 to form the housing assembly 100. In this way, the accuracy of the combination of the first housing 110 and the second housing 120 may be ensured.

For example, when the main body of the wearable device needs to be disassembled and maintained, only the fixing pin 132 needs to be withdrawn to realize the disassembly of the housing assembly 100, so as to inspect and maintain the internal structure of the main body of the wearable device and the related components.

In some embodiments, the first fixing structure and the first positioning structure may also be of other structural forms.

For example, a plurality of snap structures that cooperate with each other are provided on the first housing 110 and the second housing 120, and the snap structures are utilized to replace the first fixing structure and the first positioning structure to realize the assembly and fixing of the first housing 110 and the second housing 120.

As another example, a convex shaft structure is provided on a position on the inner wall of the first housing 110 corresponding to the support arm 131, and a pin hole structure is provided on the support arm 131 for the insertion and embedding of the convex shaft structure, so that the first fixing structure is formed through the cooperation of the convex shaft structure and the pin hole structure. Therefore, with the cooperation of the first positioning structure, the first housing 110 and the second housing 120 are located and fixed at different positions and in different directions.

In some embodiments, the first fixing structure may be omitted, and the first housing 110 and the second housing 120 may be pre-located by setting one or more first positioning structures, then the first housing 110 and the second housing 120 may be fixed by gluing, welding, or the like.

Certainly, it is also possible to omit the first positioning structure. The first housing 110 and the second housing 120 are fixed and connected from a plurality of different positions by providing a plurality of sets of support arms 131 and fixing pins 132. For these and other reasons, they will not be elaborated further here.

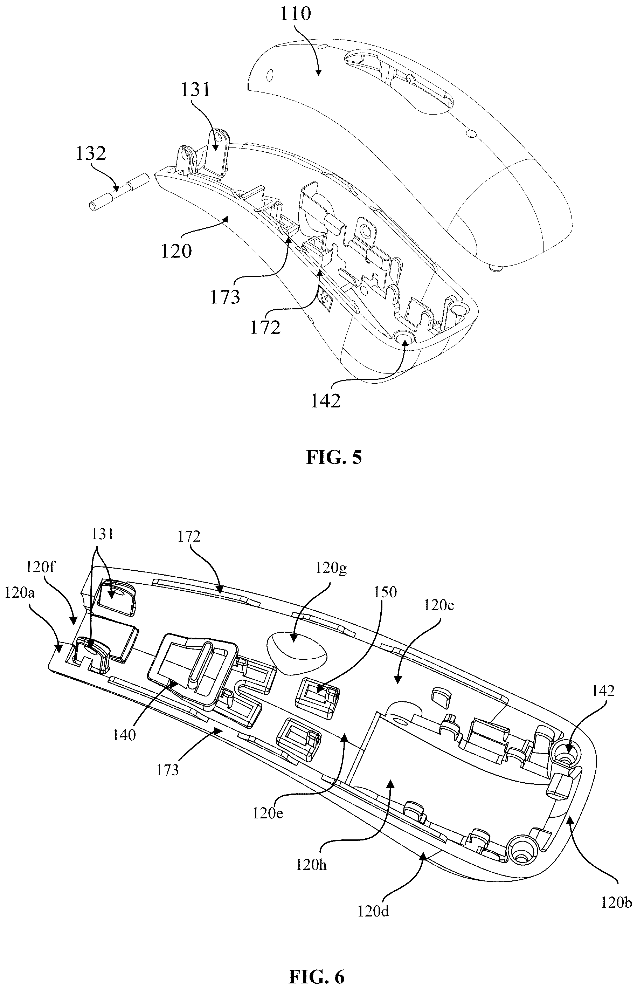

In one embodiment, referring to FIG. 4 and FIG. 5, the first housing 110 and the second housing 120 are opposite to each other and cooperatively connected to each other in the second direction to form the housing assembly 100, and the first fixing structure and the first positioning structure are provided on two ends of the housing assembly 100 that are opposite to each other in the first direction. For the convenience of description, the two ends of the housing assembly 100 that are opposite to each other in the first direction or the length direction may be defined as a first end and a second end of the housing assembly 100. When the wearable device is in a normally worn state, the first end of the housing assembly 100 may be a top end of the housing assembly 100, and the second end of the housing assembly 100 may be a bottom end of the housing assembly 100. The first fixing structure is provided at the first end of the housing assembly 100, and the first positioning structure is provided at the second end of the housing assembly 100.

By providing the first fixing structure and the first positioning structure at the two ends of the housing assembly 100 that are opposite to each other, the first housing 110 and the second housing 120 may be located and fitted together with the help of the first positioning structure in advance during the assembly process, and then the first housing 110 and the second housing 120 may be fixed with the help of the cooperation relationship between the fixing pin 132 and the support arm 131. In this way, it is conducive to the assemblers to quickly and accurately identify the assembly direction of the first housing 110 and the second housing 120 and to improve the efficiency of assembling the housing assembly 100 or the main body of the wearable device. Meanwhile, it is also convenient to inspect and maintain the housing assembly 100 and the related functional components by dismantling the housing assembly 100.

In some embodiments, the control board assembly 200, the microphone assembly 300, or the like are connected to the inner wall of the first housing 110. The first interface assembly 500, the battery assembly 700, or the like are connected to the inner wall of the second housing 120. The first housing 110 and the second housing 120 are both of a housing structure. The support arm 131 protrudes out of the inner wall of the second housing 120 substantially along the second direction toward a side where the first housing 110 is located. The fixing pin 132 is arranged through the first housing 110 and the support arm 131 substantially along the third direction. Accordingly, the first positioning protrusion 141 protrudes out of the inner wall or the end surface of the opening of the second housing 120 substantially in the second direction toward the side where the second housing 120 is located.

Therefore, based on the differentiated setting of the arrangement direction of the support arm 131 and the first positioning protrusion 141, the combination of the second housing 120 and the second assembly may be regarded as the main body for installation. This guides assemblers to quickly and accurately assemble the combination of the first housing 110 and the first assembly into the first housing 110 on the main body for installation.

The following is mainly an illustration of the main body of the wearable device and its related structures, taking both the first housing 110 and the second housing 120 adopt the housing structure as examples.

For ease of differentiation and description, two housing walls of the first housing 110 that are opposite to each other in the first direction are defined as a first housing wall 110a and a second housing wall 110b, two housing walls that are opposite to each other in the third direction are defined as a third housing wall 110c and a fourth housing wall 110d, and a housing wall that is connected between the first housing wall 110a, the second housing wall 110b, the third housing wall 110c, and the fourth housing wall 110d in the second direction is defined as a fifth housing wall 110e.

Two housing walls of the second housing 120 that are opposite to each other in the first direction are defined as a sixth housing wall 120a and a seventh housing wall 120b, two housing walls that are opposite to each other in the third direction are defined as an eighth housing wall 120c and a ninth housing wall 120d, and a housing wall that is connected between the sixth housing wall 120a, the seventh housing wall 120b, the eighth housing wall 120c, and the ninth housing wall 120d in the second direction is defined as a tenth housing wall 120e.

The combination of the first housing wall 110a and the sixth housing wall 120a forms a first side wall of the housing assembly 100, and the combination of the second housing wall 110b and the seventh housing wall 120b forms a second side wall of the housing assembly 100. The fifth housing wall 110e and the tenth housing wall 120e may be understood to be a third side wall and a fourth side wall of the housing assembly 100 that are opposite to each other in the second direction. The combination of the third housing wall 110c and the eighth housing wall 120c forms a fifth side wall of the housing assembly 100, and the combination of the fourth housing wall 110d and the ninth housing wall 120d forms a sixth side wall of the housing assembly 100. It will be appreciated that the first side wall, the second side wall, the third side wall, the fourth side wall, the fifth side wall, and the sixth side wall of the housing assembly 100 are connected to enclose the accommodating cavity 100a.

In some embodiments, referring to FIG. 1 to FIG. 3 and FIG. 5, the outer contour of the housing assembly 100 or the main body of the wearable device is constructed in a mimetic structure to enable the housing assembly 100 or the device body to adapt to physiological structural morphology between a dorsal side of the ear and the head, so as to be worn on the ear in the form of being clamped or hanging on the ear.

In other words, when the wearable device is in a normally worn state, such as a state in which the main body of the wearable device relies on the wearable assembly 820 to be suspended on the dorsal side of the ear of the user, and the speaker assembly 810 is inserted into the ear canal of the user, the first side wall is a side wall facing the front side of the user in the first direction, the second side wall is a side wall facing the lower side of the ear of the user in the first direction, and the third side wall is a side wall back away from area region where the head of the user meets the dorsal side of the ear in the second direction. The fourth side wall is a side wall facing or touching the region where the head of the user meets the dorsal side of the ear in the second direction, the fifth side wall is a side wall facing or touching the dorsal side of the ear of the user in the third direction, and the sixth side wall is a side wall facing or touching the head of the user in the third direction.

The dimension of the housing assembly 100 in the first direction may generally be set to be larger than the dimensions of the housing assembly 100 in the second direction and the third direction. The third side wall and the fourth side wall may generally be set to be curved surface structures capable of adapting to the physiological structural direction of the region where the dorsal side of the ear meets the head. For the geometric centerline of the housing assembly 100 in the first direction, the geometric centerline may generally be provided as an arcuate segment.

In some embodiments, the movement assembly includes a control board assembly 200, a microphone assembly 300, a button assembly 400, a first interface assembly 500, a second interface assembly 600, and a battery assembly 700, and the following is a description of the movement assembly on the housing assembly 100.

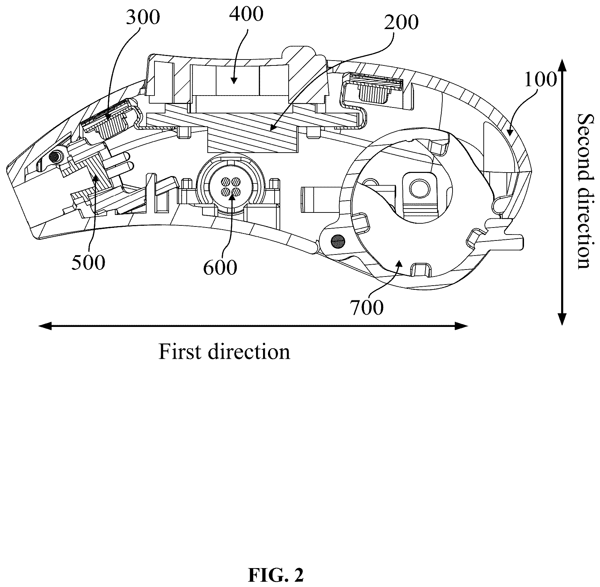

Referring to FIG. 2, the control board assembly 200 is provided in the interior of the housing assembly 100 (e.g., fixedly connected to the third side wall (e.g., the fifth housing wall 110e)). The microphone assembly 300, which may be a collection of related functional components capable of forming an air-conducted sound, is fixedly provided on the third side wall, and maintains an air path connection with the exterior of the housing assembly 100 at the third side wall.

Exemplarily, a sound pickup hole 110f may be provided through the position on the third side wall (e.g., the fifth housing wall 110e) corresponding to the microphone assembly 300, and the sound pickup hole 110f is connected to the microphone assembly 300. The external sound signal is conducted to the microphone assembly 300 using air as a medium to cause the microphone assembly 300 to realize the acquisition of the sound signal by generating mechanical vibration.

Exemplarily, a sound conduit line may also be provided within the accommodating cavity 100a, and the microphone assembly 300 is connected to the exterior of the housing assembly 100 via the sound conduit line to enable the acquisition of the sound signal.

In some embodiments, see FIG. 2, the wearable device includes two microphone assemblies 300, and the two microphone assemblies 300 are arranged on two sides of the control board assembly 200 that are opposite to each other in the first direction. With respect to the main body of the wearable device, the two microphone assemblies 300 may be configured to capture the sound signal from different directions.

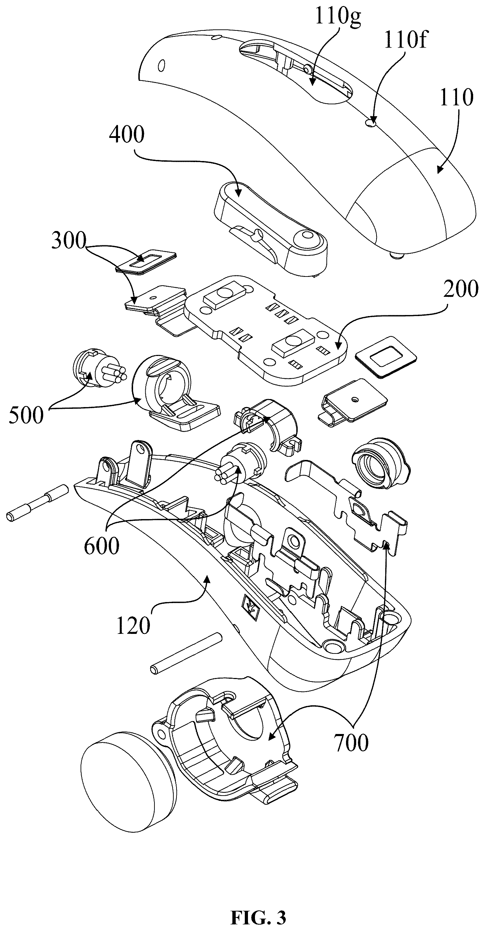

Referring to FIGs. 2 and 3, the button assembly 400 is provided in the accommodating cavity 100a in the form of a movable connection (e.g., a rotational connection, a sliding connection, etc.) with the inner wall of the first housing 110, and the button assembly 400 is at least partially exposed to the third side wall.

For example, the button assembly 400 is arranged on a side of the control board assembly 200 facing the third side wall in the second direction, a button window 110g is provided through a position of the third side wall corresponding to the button assembly 400, and the button assembly 400 is exposed and protrudes out of the button window 110g.

By applying a pressing force toward the control board assembly 200 to the button assembly 400, the button assembly 400 may be induced to press button switches on the control board assembly 200 to realize the input of the preset command.

In some embodiments, the button assembly 400 may also include a switching component capable of generating an electrical signal, the button assembly 400 is electrically connected to the control board assembly 200, and the command information is input to the control board assembly 200 by triggering the button assembly 400.

Referring to FIGs. 2, 6, and 12, the first interface assembly 500 is fixedly connected to the second housing 120 (e.g., fixed to the fourth side wall) by at least partially exposing to the first side wall and is arranged in the accommodating cavity 100a. Exemplarily, a first connection port 120f may be provided through the first side wall, and an interface end of the first interface assembly 500 may be directly opposite the first connection port 120f in the first direction. The interface end of the first interface assembly 500 may extend into the first connection port 120f and may also extend out of the housing assembly 100 from the first connection port 120f.

Accordingly, an interface structure capable of being in pluggable adaptive connection with the first interface assembly 500 may be provided on the speaker apparatus (specifically, at the end of the wearable assembly 820 away from the speaker assembly 810). The interface structure and the first interface assembly 500 are used to fix the speaker apparatus to the main body of the wearable device to realize an electrical connection between the speaker apparatus and the movement assembly (e.g., the control board assembly 200).

Referring to FIGs. 2, 6, and 12, the second interface assembly 600 is fixedly connected to the second housing 120 (e.g., fixed to the fourth side wall) by at least partially exposing to the fifth side wall or the sixth side wall and is arranged within the accommodating cavity 100a. Exemplarily, the second connection port 120g may be provided through the fifth side wall (e.g., the eighth housing wall 120c), the interface end of the second interface assembly 600 may be arranged opposite the second connection port 120g in the third direction, and the interface end of the second interface assembly 600 may also extend into the second connection port 120g. When applying the wearable device, the second interface assembly 600 may be utilized to connect to an external regulating device such as a cell phone, a computer, or the like, in order to make adaptive adjustments to the working mode, the working parameters, or the like of the wearable device according to the user's needs.

Referring to FIG. 2 and FIG. 4, the battery assembly 700 may be fixedly connected to the second housing 120 or movably connected to the second housing 120. Exemplarily, the battery window 120h may be provided in a region where the second side wall meets the fourth side wall, and the battery assembly 700 is rotatably connected to the second housing 120, so that the battery assembly 700 may enter and exit the accommodating cavity 100a through the battery window 120h by rotating the battery assembly 700, which facilitates battery replacement.

Based on this, by dispersing the various parts of the movement assembly in different positions or different directions of the housing assembly 100, not only the structure and space of the housing assembly 100 is utilized reasonably to ensure the performance of the wearable device, but also the operation of the wearable device is facilitated.

For example, by arranging the first interface assembly 500 and the battery assembly 700 at two opposite ends of the main body of the wearable device in the first direction, and arranging the button assembly 400 in a position between the first interface assembly 500 and the battery assembly 700 in the first direction, on the one hand, it is not only convenient to connect the speaker apparatus (e.g., the wearable component 820) via the first interface assembly 500, but also convenient to replace the battery in the battery assembly 700. On the other hand, when the device is in a worn state, the button assembly 400 may be located at a position substantially in the middle of the rear side or at a position at the lower rear side of the main body of the wearable device, which not only facilitates operation of the button assembly 400, but also avoids structural interference of the first interface assembly 500 and the battery assembly 700 with the button assembly 400.

As another example, by arranging the two microphone assemblies 300 on two opposite sides of the button assembly 400 or the control board assembly 200 in the first direction, a curved surface structure adopted by the third side wall may be used, so that the sound pickup holes 110f corresponding to the two microphone assemblies 300 may be made to face different directions, thereby effectively avoiding that the external sound signal is blocked by the body parts of the user, ensuring the effect of the microphone assemblies 300 on the acquisition of the sound signal
In embodiments in which the housing assembly 100 adopts the mimetic structure, the dimension of the housing assembly 100 in the third direction may be set such that the dimension of the housing assembly 100 in the third direction is progressively decreasing from the side on which the second side wall is located towards the side on which the first side wall is located. For example, the dimension of the first end of the housing assembly 100 in the third direction is smaller than the dimension of the second end in the third direction. As a result, it is possible to make the width dimension of the end of the main body of the wearable device that connects the speaker in the first direction (e.g., the end at which the first interface assembly 500 is located) smaller than the width dimension of the end at which the battery assembly 500 is located, which accommodates the requirements of the battery assembly 500 for the space dimension of the housing assembly 100.

In some embodiments, the housing assembly 100 is made of PI, such as a one-piece structure in which both the first housing 110 and the second housing 120 are made of PI, both of which are connected opposite to each other to form the housing assembly 100.

Compared to related technologies in which the outer shell of the wearable device is usually made of polycarbonate (PC), ABS plastic (e.g., a terpolymer formed from the three monomers: acrylonitrile (A), butadiene (B), and styrene (S)), etc., in this embodiment, based on the good biocompatibility, mechanical strength and other characteristics of the PI material, the structural form (including an appearance form) of the housing assembly 100 may be made more stable, and the thickness of the housing is thinner, which is conducive to realizing the miniaturization and lightweighting of the wearable device, and enhancing the stability of the overall structure of the housing assembly 100.

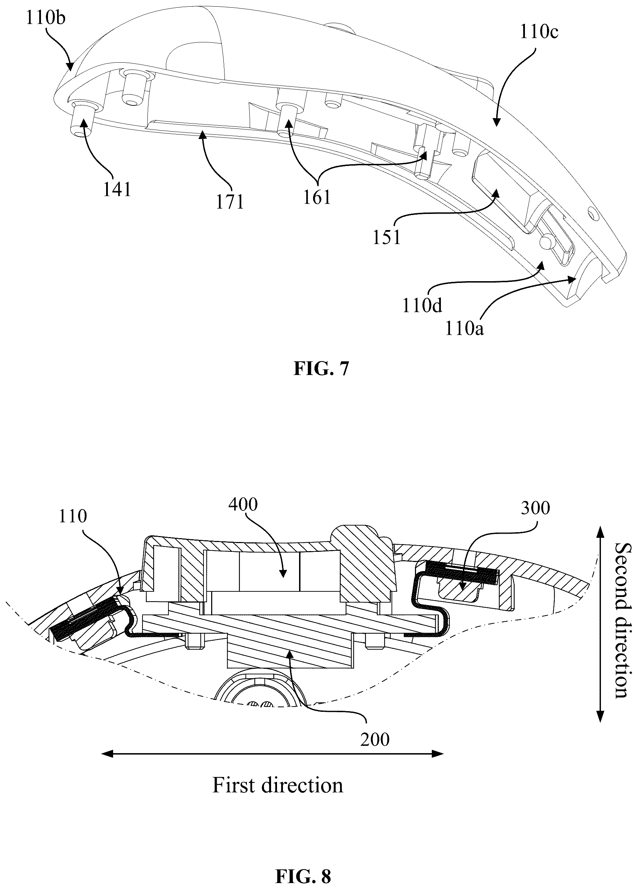

In one embodiment, referring to FIG. 8 to FIG. 10, the movement assembly includes a microphone assembly 300, the first housing 110 is provided with a sound pickup hole 110f, and the sound pickup hole 110f is provided through the fifth housing wall 110e to be able to connect the accommodating cavity 100a to the exterior of the housing assembly 100. The microphone assembly 300 is understood to be a collection of related devices capable of forming an "air-conducted sound", the microphone assembly 300 is provided in the accommodating cavity 100a and fixed to the inner wall (e.g., the fifth housing wall 110e) of the first housing 110, and the sound inlet channel of the microphone assembly 300 is in a sealed communication with the sound pickup hole 110f.

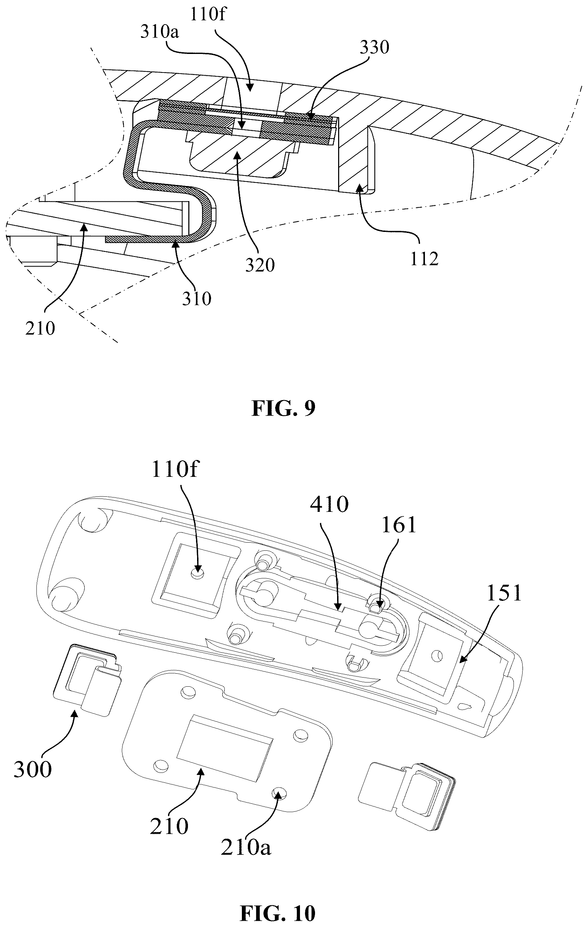

Exemplarily, referring to FIG. 9, the microphone assembly 300 includes a first circuit board 310, a microphone 320, and a protective mesh 330. The protective mesh 330 is fixed to an inner surface of the fifth housing wall 110e by covering a sound outlet end of the sound pickup hole 110f. For example, the protective mesh 330 is glued and fixed to the fifth housing wall 110e. The first circuit board 310 is stacked and fixed to a side of the protective mesh 330 that is opposite to the sound pickup hole 110f (e.g., the first circuit board 310 is glued to the protective mesh 330), the microphone 320 is provided on a side of the first circuit board 310 that is opposite to the protective mesh 330, and a position of the first circuit board 310 corresponding to the sound inlet channel of the microphone 320 is provided with a sound guiding hole 310a.

The microphone 320 serves as the main component in the microphone assembly 300 for realizing the acquisition of the sound signal, the first circuit board 310 serves as the mounting carrier of the microphone 320, and an electrical signal connection relationship is established between the microphone 320 and the control board assembly 200 through the first circuit board 310.

In this way, by using the first housing 110 as a mounting carrier for the microphone assembly 300, the structural space of the housing assembly 100 may be fully utilized, and a count of related parts may be reduced, so as to provide support for lightweighting, miniaturization, etc., of the wearable device. By utilizing the sealed communication relationship between the microphone assembly 300 and the sound pickup hole 110f, the external sound signal may enter into the sound inlet channel of the microphone assembly 300 via the sound pickup hole 110f by using air as a medium to trigger mechanical vibration of the relevant components of the microphone assembly 300, thereby realizing the acquisition of external sound signal through the acquisition and conversion of the mechanical vibration signal.

Additionally, based on the cooperation between the first circuit board 310 and the protective mesh 330, it is possible to securely fix the microphone 320 to the first housing 110, so as to enable the sound inlet channel of the microphone 320 to remain in coaxial sealed communication with the sound pickup hole 110f through the sound guiding hole 310a. However, the protective mesh 330 may prevent contaminants such as water, dust, or the like outside the wearable device from intruding into the microphone assembly 300 via the sound pickup hole 110f, thereby ensuring the normal operation of the microphone assembly 300.

In other embodiments, the microphone assembly 300 may also adopt other structural forms. For example, the protective mesh 330 is omitted, and the microphone 320 is provided on a side of the first circuit board 310 that faces the sound pickup hole 110f. With the structural relationship between the first circuit board 310 and the first housing 110, the sound inlet channel of the microphone 320 may be directly sealed to the sound pickup hole 110f.

It should be noted that a person skilled in art should be aware of the basic working principle of the air-conducted microphone, and therefore, the specific process and principle of the acquisition of the sound signal by the microphone assembly 300 will not be explained herein.

In one embodiment, the wearable device includes two sound pickup holes 110f and two microphone assemblies 300. The two sound pickup holes 110f correspond one-to-one and are in sealed communication with the sound inlet channels of the two microphone assemblies 300. In the case of the sound pickup holes 110f, sound inlet ends of the two sound pickup holes 110f are spaced apart from each other, to cooperate with the microphone assemblies 300 to realize the acquisition of the external sound signal at different positions or in different directions.

Exemplarily, in some embodiments, based on the curved surface structure of the third side wall e.g., the fifth housing wall 110e) of the housing assembly 100, the sound inlet ends of the two sound pickup holes 110f are arranged spaced apart on the outer surface of the third side wall in the first direction, thereby enabling the microphone assembly 300 to pick up the external sound signal from different directions.

In other embodiments, according to the difference in the functional configuration or structural form of the microphone assembly 300, the two sound pickup holes 110f may also be sealed to the same sound inlet channel of the same microphone assembly 300 at the same time, to meet different application requirements.

In one embodiment, referring to FIGs. 7, 9, and 10, referring to FIGs. 7, 9, and 10, the inner wall of the first housing 110 (e.g., a surface of the fifth housing wall 110e) is provided with a second fixing structure. The second fixing structure may include a fixing retaining wall 151 protruding out of the inner wall of the first housing 110. For example, the fixing retaining wall 151 is integrally formed with the first housing 110. A holding groove is formed between the fixing retaining wall 151 and the inner wall of the fifth housing 110e. At least a portion of the microphone assembly 300 (specifically the end at which the microphone 320 is located) is accommodated in the holding groove, and the sound outlet end of the sound pickup hole 110f is located within the contour of the holding groove.

On the one hand, with the help of the holding groove formed between the fixing retaining wall 151 and the inner wall of the first housing 110, it is convenient to quickly locate the mounting position of the microphone assembly 300, so as to provide support for the structural combination of the microphone assembly 300 and the first housing 110. On the other hand, with the help of the fixing retaining wall 151, the microphone assembly 300 may be restricted to a preset position within the accommodating cavity 100a (e.g., within the holding groove), thereby ensuring that the sound inlet channel of the microphone 320 may remain in coaxial sealed communication with the sound pickup hole 110f.

In some other embodiments, the second fixing structure may also adopt other suitable structural forms, for example, on the premise of ensuring that the microphone assembly 300 is sealed to the sound pickup hole 110f, the second fixing structure may be snap provided on the inner wall of the first housing 110 to snap-fit and fix the microphone assembly 300 at a position corresponding to the sound pickup hole 110f. Alternatively, the second fixing structure may be a countersink structure provided on the inner wall of the third side wall to insert at least a portion of the microphone assembly 300 into the space of the second fixing structure. For these and other reasons, they will not be elaborated further here.

In one embodiment, referring to FIG. 2, FIG. 3, and FIG. 8 to FIG. 10, the movement assembly includes a control board assembly 200 and a microphone assembly 300. The control board assembly 200 is fixedly connected to the inner wall of the first housing 110 and electrically connected to the microphone assembly 300. The control board assembly 200 is mainly configured to receive the sound signal collected by the microphone assembly 300 and convert the sound signal into an electrical signal for outputting to the speaker apparatus.

Exemplarily, the wearable device includes two microphone assemblies 300, and the two microphone assemblies 300 are spaced apart from each other at two opposite sides of the control board assembly 200 and are electrically connected to the control board assembly 200, respectively. For example, the control board assembly 200 is arranged between the two microphone assemblies 300 in the first direction.

More specifically, referring to FIGs. 8 to 10, the control board assembly 200 includes a second circuit board 210 that has a material hardness set to be greater than a material hardness of the first circuit board 310. For example, the first circuit board 310 may adopt a flexible printed circuit board (FPC), and the second circuit board 210 may adopt a rigid printed circuit board (PCB).

For the purpose of description, two opposite ends of the first circuit board 310 in its length direction (or first direction) are defined as a first end and a second end. The microphone 320, etc., is arranged at the first end of the first circuit board 310. The second end of the first circuit board 310 is fixedly connected (e.g., soldered) to the second circuit board 210.

On the one hand, based on the combination of soft board and hard board formed between the microphone assembly 300 and the control board assembly 200, firstly, it is possible to enhance the compactness of the structural connection between the microphone assembly 300 and the control board assembly 200, saving the occupation of the structural space of the accommodating cavity 100a. Secondly, based on the flexible deformable characteristics of the first circuit board 310 compared to the second circuit board 210, it may be adapted to the structural morphology of the internal space of the housing assembly 100 (e.g., the inner surface of the first housing 110), and the relative mounting position between the microphone assembly 300 and the control board assembly 200 may be flexibly adjusted (e.g., facilitating the microphone assembly 300 to be provided and fixed directly on the first housing 110). Thirdly, it is convenient to disassemble the microphone assembly 300 and the control board assembly 200 to realize recycling of important electronic components, such as the control chip in the control board assembly 200.

On the other hand, in some embodiments in which the housing assembly 100 adopts a mimetic structure, since the third side wall (e.g., the fifth housing wall 110e) adopts a curved surface structure, the control board assembly 200 and the microphone assembly 300 may have a different direction or generate a difference in height, etc., relative to the inner surface of the third side wall. However, the utilization of the combination of soft board and hard board between the microphone assembly 300 and the control board assembly 200 well adapts to the differences in the mounting positions and mounting forms between the control board assembly 200 and the microphone assembly 300, to conveniently and accurately provide and fix the control board assembly 200 and the microphone assembly 300.

In one embodiment, referring to FIGs. 7 and 10, the inner surface of the first housing 110 (specifically, the fifth housing wall 110e) is provided with a third fixing structure, which is mainly configured to support and fix the second circuit board 210 at a preset position within the accommodating cavity 100a, maintaining a sufficient spacing distance between the control board assembly 200 and the microphone assembly 300.

Exemplarily, referring to FIG. 7 and FIG. 10, the third fixing structure may include a plurality of support posts 161 protruding out of the fifth housing wall 110e, and the plurality of support posts 161 are spaced apart around the geometric centerline of the second circuit board 210. Accordingly, a position of the second circuit board 210 corresponding to the support posts 161 is provided with a positioning through-hole 210a. The support posts 161 are inserted in the positioning through-hole 210a, thus the second circuit board 210 or the control board assembly 200 may be supported and fixed to the first housing 110 by spacing apart from and facing the inner surface of the fifth housing wall 110e.

On the one hand, with the help of the support post 161 with the positioning through-hole 210a, it is possible to make the control board assembly 200 and the microphone assembly 300 have a fixed spacing distance from each other in order to avoid signal interference between the control board assembly 200 and the microphone assembly 300.

On the other hand, based on the support posts 161, a certain structural gap may be formed between the second circuit board 210 and the inner wall of the first housing 110, so as to provide a structural space for the button assembly 400 to be assembled in the first housing 110. For example, the second circuit board 210 may be arranged transversely within the accommodating cavity 100a along the third direction (or the width direction of the main body of the wearable device) (it may also be understood that a plane where the second circuit board 210 is located in a plane substantially perpendicular to the third housing wall 110c and the fourth housing wall 110d), thereby utilizing the structural gap between the second circuit board 210 and the fifth housing wall 110e as a structural mounting space as well as an active space for the button assembly 400. This is convenient for controlling the overall width and thickness dimensions of the main body of the wearable device, as well as facilitating the step-by-step fixing and assembly of the microphone assembly 300 and the control board assembly 200 in the first housing 110.

In other embodiments, the third fixing structure may also adopt other suitable structural forms. For example, the support post 161 may protrude out of the second circuit board 210, and a slot structure for the insertion and fixing of the support post 161 is provided on the inner wall of the first housing 110, which will not be discussed herein.

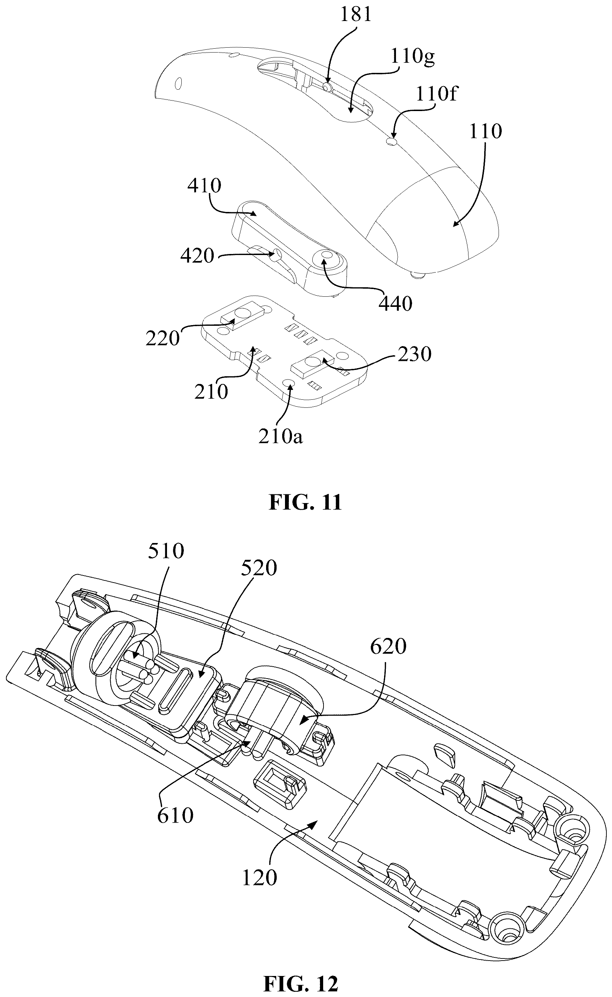

In one embodiment, referring to FIGs. 4-6 and combining with FIGs. 10 and 12, a first limiting structure is also provided between the first housing 110 and the second housing 120. On the one hand, the first limiting structure may restrict the relative position of the first housing 110 and the second housing 120 and enhance the strength of the structural connection between the first housing 110 and the second housing 120. On the other hand, the first limiting structure may prevent the first housing 110 and the second housing 120 from generating a structural deformation at the point where the first housing 110 and the second housing 120 meet each other, so as to avoid extrusion of the control board assembly 200 (specifically, the second circuit board 210) due to the structural deformation of the housing.

Exemplarily, referring to FIG. 4-FIG. 6, the first housing 110 and the second housing 120 adopts a housing structure, and surfaces where the first housing 110 connects against the second housing 120 in the second direction are defined as joint surfaces. A joint surface of the first housing 110 is provided with a first limiting flange 171 protruding toward the second housing 120 substantially in the second direction, and a joint surface of the second housing 120 is provided with a second limiting flange 172 protruding toward the first housing 110 substantially in the second direction.

With respect to the assembled and molded state of the housing assembly 100, the first limiting flange 171 is provided on a side of the second limiting flange 172 that is opposite to the accommodating cavity 100a in the third direction (e.g., the first limiting flange 171 is provided on the outside of the accommodating cavity 100a using the accommodating cavity 100a as a reference datum).

By means of the second limiting flange 172 abutting the first limiting flange 171 from the inner side of the accommodating cavity 100a, the first limiting structure is formed, which may not only prevent the first housing 110 from shrinking and deforming in the third direction at the opening due to the influence of the properties of the material, thereby preventing extrusion of the control board assembly 200 (specifically, the second circuit board 210). At the same time, the structural connection strength between the first housing 110 and the second housing 120 at the joint surface may also be enhanced, reducing or eliminating the structural gap between the first housing 110 and the second housing 120 to ensure the integrity of the overall contour of the housing assembly 100.

In some embodiments, the first limiting structure may also be arranged in other structural forms between the joint surface of the first housing 110 and the joint surface of the second housing 120. For example, a flange is provided on the joint surface of the second housing 120, and a slot is provided on a position of the joint surface of the first housing 110 corresponding to the flange, and the flange is aligned and inserted in the slot to form the first limiting structure, which prevents the first housing 110 from deformation in the third direction, so as to prevent the first housing 110 from squeezing the first assembly (e.g., the control board assembly 200).

In some embodiments, for the same requirement as the protection of the control board assembly 200, the first limiting flange 171 may also be located on a side of the second limiting flange 172 facing the accommodating cavity 100a in the third direction. For example, the first limiting flange 171 is located in the interior of the accommodating cavity 100a using the accommodating cavity 100a as a reference. With the first limiting flange 172 abutting against the second limiting flange 172 from the inner side of the accommodating cavity 100a, the second housing 120 may be prevented from generating a structural deformation of opening constriction in the third direction, which in turn squeezes the second assembly (e.g., the first interface assembly 500, etc.) provided in the second housing 120.

In some embodiments, the first limiting structure may include a flange and a slot, and the flange and the slot are provided at the joint surfaces of the first housing 110 and the second housing 120 at the same time. By utilizing the structural relationship in which the flange and slot are provided in a one-to-one correspondence, the first housing 110 and the second housing 120 may be prevented from being connected to each other, so as to protect the first assembly and the second assembly from being extruded by the housing.

In one embodiment, referring to FIG. 4 to FIG. 6, there are a plurality of groups of first limiting structures, and the plurality of groups of the first limiting structures are arranged on two sides of the accommodating cavity 100a that are opposite to each other in the third direction. For example, on two sides of the second circuit board 210 that are opposite to each other in the third direction. Such a setting further prevents the first housing 110 from deformation and ensures the stability of the structural connection between the first housing 110 and the second housing 120.

Certainly, the first limiting structure may also be spaced apart around the second direction, so as to have a limiting effect on the deformation of the housing from the third direction, the first direction, and the other directions, to ensure that the joint surfaces of the first housing 110 and the second housing 120 may be stabilized against each other.

In one embodiment, referring to FIGs. 4-6, the joint surface of the first housing 110 or the second housing 120 further includes an avoidance structure primarily configured to avoid a portion of the first assembly or the second assembly during assembly of the first housing 110 and the second housing 120 to adapt to the spatial dimensions required by the first assembly or the second assembly for the accommodating cavity 100a. Exemplarily, the first limiting flange 171 is located on a side of the second limiting flange 172 that is opposite to the accommodating cavity 100a in the third direction, and the avoidance structure may be a notch provided on the second limiting flange 172, which, for the sake of easy differentiation and description, is defined as the second avoidance notch 173.

Exemplarily, the first limiting flange 171 is located on a side of the second limiting flange 172 that is opposite to the accommodating cavity 100a in the third direction, and the avoidance structure may be a second avoidance notch 173 located on the second limiting flange 172, or a recess structure provided on a surface of the side of the second limiting flange 172 facing the accommodating cavity 100a, or a structural gap between two adjacent second limiting flanges 172 in the first direction.

Taking the second avoidance notch 173 as an example, using the second avoidance notch 173 during assembly of the first housing 110 and the second housing 120 may enable the second housing 120 to adapt to the contour dimensions of the second circuit board 210 to avoid or accommodate a portion of the second circuit board 210 toward the exterior of the housing assembly 100 in the third direction. This not only ensures that the joint surfaces of the first housing 110 and the second housing 120, as well as the first limiting flange 171 and the second limiting flange 172, may effectively abut against each other, but also avoids structural extrusion or structural interference with the control board assembly 200, or the like.

In one embodiment, referring to FIG. 8 to FIG. 11, the movement assembly includes a control board assembly 200, a microphone assembly 300, and a button assembly 400. The first housing 110 is provided with a button window 110g passing through the fifth housing wall 110e, and the button window 110g connects the accommodating cavity 100a to the exterior of the housing assembly 100. For example, in an embodiment where the movement assembly includes two microphone assemblies 300, the button window 110g may be arranged between two sound pickup holes 110f along the first direction. The button assembly 400 includes an operating button 410 movably connected to the inner wall of the first housing 110, and at least a portion of the operating button 410 is exposed to and protrudes out of the first housing 110 via the button window 110g.

Exemplarily, the control board assembly 200 is arranged on a side of the operating button 410 that is opposite to the button window 110g, and the control board assembly 200 is provided with a button switch for cooperating with the operating button 410. By maneuvering the operating button 410 to move relative to the first housing 110, the operating button 410 may be configured to touch and press the button switch of the control board assembly 200, to realize the input of the preset command.

By connecting the button assembly 400 to the first housing 110, and using the first housing 110 as a mounting carrier for the button assembly 400, not only full utilization of the structure and space of the housing assembly 100 is achieved, but also the configuration number of parts and components is reduced, which provides support for the lightweight and miniaturized design of the wearable device.

In one embodiment, referring to FIG. 11, a first pivot structure is provided between the operating button 410 and the first housing 110, which may include a pivot protrusion 181 and a pivot groove 420. The pivot groove 420 is provided on two sides of the operating button 410 that are opposite to each other in the third direction, and the pivot protrusion 181 protrudes out of the inner wall (e.g., the third housing wall 110c and the fourth housing wall 110d) of the first housing 110 and is aligned and inserted in the pivot groove 420. Two ends of the operating button 410 that are opposite to each other in the radial direction are a first end and a second end of the operating button 410, respectively. Correspondingly, the button switch of the control board assembly 200 may be provided at the first end and the second end or a position corresponding to the first end and the second end of the operating button 410.

Therefore, based on the presence of the first pivot structure, the operating button 410 is caused to rotate around the first pivot structure relative to the first housing 110 by the external force such that one of the first end and the second end of the operating button 410 protrudes out of the first housing 110 or tilts relative to the first housing 110, and the other of the first end and the second end of the operating button 410 rotates toward a side of the control board assembly 200 to press against and trigger the corresponding button switch, thereby realizing the input of command information.

Exemplarily, referring to FIG. 11, the control board assembly 200 includes a first circuit board 210, a first switch 220, and a second switch 230. The first circuit board 210 is spaced apart on a side of the operating button 410 that is opposite to the button window 110g (e.g., supported and fixed to the first housing 110 by the support post 161), and the first switch 220 and the second switch 230 are provided on a side of the second circuit board 210 facing the operating button 410. The first switch 220 corresponds to the first end of the operating button 410, and the second switch 230 corresponds to the second end of the operating button 410.

By pressing the first end of the operating button 410 toward the interior of the housing assembly 100, the first end of the operating button 410 may press the corresponding first switch 220 to realize the input of the preset command. In this process, since the operating button 410 is rotated around the first pivot structure in a first preset direction (e.g., a counterclockwise direction) relative to the first housing 110, the second end of the operating button 410 may protrude out of an outer surface of the first housing 110 or tilt relative to the first end of the operating button 410.

Conversely, by pressing the second end of the operating button 410 toward the interior of the housing assembly 100, the second switch 220 is triggered to realize the input of the preset command. In this process, since the operating button 410 is rotated around the first pivot structure relative to the first housing 110 along a second preset direction (e.g., a clockwise direction) that is opposite to the first preset direction, the first end of the operating button 410 may protrude out of the outer surface of the first housing 110 or tilt relative to the second end of the operating button 410.

In some embodiments, the first end and the second end of the operating button 410 may be arranged symmetrically about the first pivot structure, which ensures the smoothness of the rotation of the operating button 410 relative to the first housing 110, and facilitates the selection or control of the position of the button switch (e.g., the first switch 220 and the second switch 230) on the second circuit board 210.

Referring to FIGs. 1, 2, and 8, in some embodiments in which the housing assembly 100 adopts the mimetic structure, the third side wall (i.e., the fifth housing wall 110e) is a curved surface structure, and a plane in which the control board assembly 200 (specifically, the second circuit board 210) is located is parallel to the rotation axis of the operating button 410 or the axis of the first pivot structure. This makes it difficult to maintain a consistent height of the first end and the second end of the operating button 410 protruding out of the outer wall of the third side wall, which may easily compromise the operating experience of the button assembly 400 and generate problems such as erroneous operations.

For ease of description, taking the wearable device being in a worn state as a reference, the first end of the operating button 410 may be understood to be a relatively lower end of the operating button 410 in the first direction or in the up-down direction of the user. Referring to FIG. 11, button protrusion 440 is provided on the outer surface of the first end of the operating button 410 protruding toward the exterior of the housing assembly 100, for example, the button protrusion 440 protrudes out of the outer surface of the first end of the operating button 410 along the second direction.

Thus, with the aid of the button protrusion 440, not only may the height difference between the two ends of the operating button 410 relative to the outer surface of the housing assembly 100 be adjusted or compensated for, to achieve the purpose of enhancing the operating experience, but also to help reduce the risk of erroneous operations of the operating button 410.

In other embodiments, the button protrusion 440 may also be provided protruding out of the second end of the operating button 410, or the first end and the second end of the operating button 410 may be provided in different structural forms. This may also serve to enhance the operating experience and reduce the risk of erroneous operations, thereby meeting the requirements for different types of operations.

In some embodiments in which the first housing 110 and the second housing 120 are made of PI, the button assembly 400 (specifically, the operating button 410) may also be a one-piece structure made of PI. This allows the materials of various parts of the main body of the wearable device to be consistent, which is not only conducive to the processing of the related parts but also ensures that the related parts have good biocompatibility and sufficient mechanical strength.

In one embodiment, referring to FIG. 2 and FIGs. 12-14, the movement assembly includes a first interface assembly 500 and a second interface assembly 600, and the housing assembly 100 is provided with a first connection port 120f and a second connection port 120g connecting the accommodating cavity 100a to the exterior of the housing assembly 100. The first connection port 120f is provided through the first side wall (i.e., the first housing wall 110a and the sixth housing wall 120a) of the housing assembly 100, and the second connection port 120g is provided through the eighth housing wall 120c of the second housing 120. When the wearable device is in the worn state, the first connection port 120f is located at the top of the housing assembly 100 in the up-down direction of the user and towards the front side of the user, and the second connection port 120g is located in the middle of the housing assembly 100 in the left-right direction of the user and towards the dorsal side of the ear of the user.

The first interface assembly 500 includes a first interface member 510 and a first fixing member 520. The first interface member 510 includes an interface end and a wire end that is opposite to the interface end, and the first interface member 510 is arranged in the accommodating cavity 100a with the interface end facing the first connection port 120f, so that a connector of the speaker apparatus (e.g., the wearable assembly 820) may be inserted into the accommodating cavity 100a via the first connection port 10, and thus be adapted to be connected to the first interface member 510 in a pluggable or detachable, or fixedly connected form. The wire end of the first interface member 510 is configured to connect to the control board assembly 200, for example, by connecting to the second circuit board 210 via the wire assembly.

The first fixing member 520 and the first interface member 510 cooperate with each other to fix the first interface member 510 to the second housing 120. For example, the second housing 120 is provided with a fourth fixing structure 140 between the inner wall of the second housing 120 (e.g., specifically, the tenth housing wall 120e), and the fourth fixing structure may be provided to fix the first fixing member 520 (together with the first interface member 510) to the second housing 120 in at least two different directions. The first interface member 510 is fixed to the first fixing member 520.

The second interface assembly 600 includes a second interface member 610 and a second fixing member 620. The second interface member 610 includes an opening end and a wire end. The second interface member 610 is provided in the accommodating cavity 100a with the interface end squarely facing the second connection port 120g, and a connector of the external regulating device may extend into the accommodating cavity 100a via the second connection port 120g and be adapted to connect to the second interface member 610 in a pluggable and detachable form.

The second retaining member 620 and the second interface member 610 cooperate with each other to fix the second interface member 610 to the second housing 120. For example, the inner wall of the second housing 120 (specifically, the tenth housing wall 120e) is provided with a fifth fixing structure 150, and the second fixing member 620 is fixedly connected to the fifth retaining structure 150 to clamp and fix the second interface member 610 between the second fixing member 620 and the inner wall of the second housing 120.

In some embodiments, the first fixing member 520 or the second fixing member 620 may be omitted, and the first interface member 510 or the second interface member 610 may be snap-fitted to the second housing 120 by providing a snap-fastener or the like on the inner wall of the second housing 120. Alternatively, the first interface member 510 or the second interface member 610 may be directly fixed by gluing, welding, or the like. For these and other reasons, they will not be elaborated further here.

Based on this, using the second housing 120 as a mounting carrier for the first interface assembly 500 and the second interface assembly 600 may realize the full utilization of the structural space of the housing assembly 100, making the structure of the wearable device more compact, which is conducive to realizing a lightweight and miniaturized design of the wearable device.

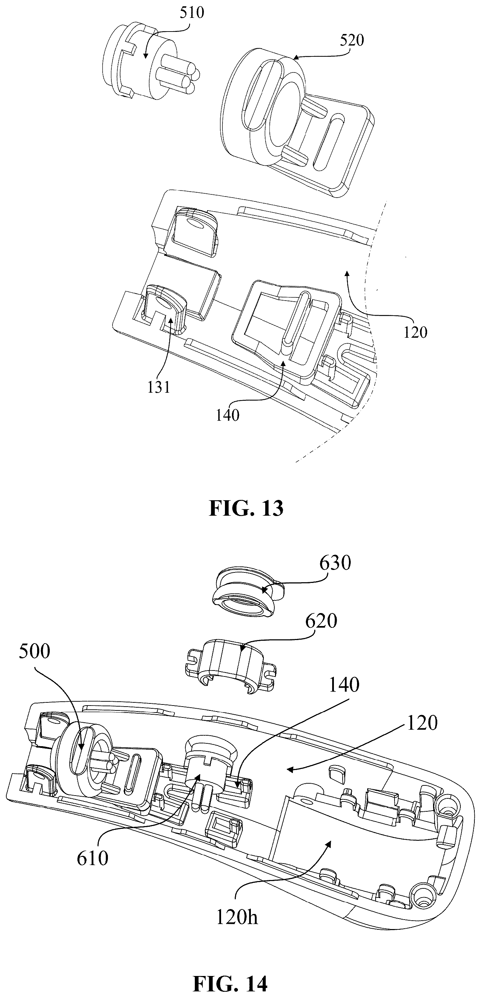

In some embodiments, referring to FIG. 14, since the second interface assembly 600 is usually not required to be connected to the external regulating device under a normally used state of the wearable device, in order to ensure the structural sealing or the integrity of the contour of the whole device, a sealing member 630 may be provided at the second connection port 120g. The sealing member 630 may be a sealing plug of a plastic material or other suitable structural components, and the second connection port 120g may be selectively closed and opened by inserting the sealing member 630 into or pulling it out of the second connection port 120g.

In some embodiments where the speaker apparatus is used as a consumable for the wearable device, or in some scenarios where the speaker apparatus is unassembled and connected to the main body of the wearable device, the sealing member 630 may also be used to temporarily close the first connection port 120f or the second connection port 120g.

In some embodiments in which the housing assembly 100 is made of PI, the first fixing member 520 and the second fixing member 620 are one-piece structures made of PI, which may make the materials of various parts of the main body of the wearable device to be more consistent, which is not only conducive to the processing of the related parts but also ensures that the related parts have good biocompatibility and sufficient mechanical strength.

As previously mentioned, the first interface assembly 500 or the second interface assembly 600 may be omitted. Therefore, in some embodiments, the first interface assembly 500 or the second interface assembly 600 may be referred to as the interface assembly, the first interface member 510 or the second interface member 610 as the interface member, and the first fixing member 520 or the second fixing member 620 as the fixing member.

In one embodiment, referring to FIG. 2-FIG. 4, FIG. 6, and FIG. 15, the movement assembly includes a battery assembly 700, the housing assembly 100 is provided with a accommodating cavity 100a that connects the accommodating cavity 100a to the exterior of the housing assembly 100. For example, battery window 120h may be provided through the seventh housing wall 120b and the tenth housing wall 120e of the second housing 120. In the case of the housing assembly 100, the battery window 120h may be a strip window provided through the second side wall and the fourth side wall. Thus, in some embodiments, a width direction of the battery window 120h may be understood to be the third direction of the housing assembly 100, and a length direction of the battery window 120h may be understood to be a direction around the third direction of the housing assembly 100.

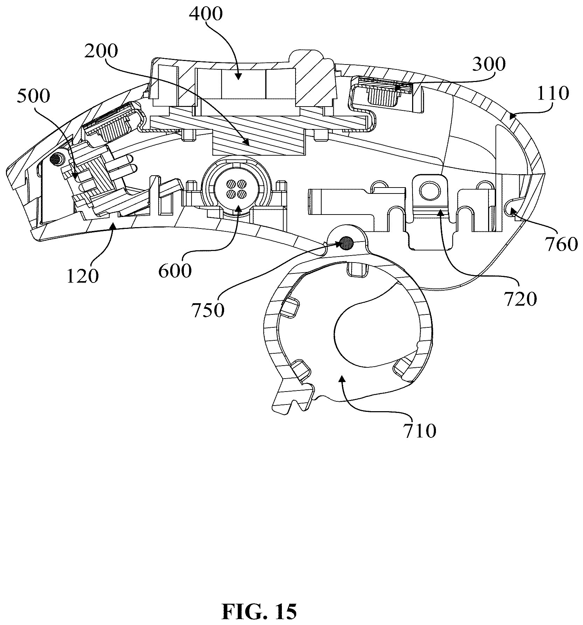

The battery assembly 700 includes a battery bracket 710 configured to mount a battery 730 and an electrode elastic piece 720 configured to electrically connect the control board assembly 200. Referring to FIG. 15, a second pivot structure 750 and a locking structure 760 are formed between the battery bracket 710 and the second housing 120. The second pivot structure 750 is configured to establish a relatively rotatable structural connection relationship between the battery bracket 710 and the second housing 120, to enable the battery bracket 710 to rotate around the second pivot structure 750 relative to the second housing 120 (the axis of the second pivot structure 750 or a direction of a rotation axis of the battery bracket 710 is the third direction), thereby enabling the battery bracket 710 to enter and exit the accommodating cavity 100a via the battery window 120h. The locking structure 760 is configured to lock the battery bracket 710 to the second housing 120 (e.g., to keep the battery bracket 710 within the accommodating cavity 100a), i.e., the locking structure 760 is capable of locking the battery bracket 710 to the second housing 120 in a state in which the battery bracket 710 closes the battery window 120h.

The electrode elastic piece 720 is provided in the accommodating cavity 100a and is fixedly connected to the second housing 120. For example, two electrode elastic pieces 720 are provided, and the two electrode elastic pieces 720 are provided on two opposite sides of the battery window 120h in the third direction. When the battery bracket 710 is locked to the second housing 120 by the locking structure 760 so that the battery 730 that is provided on the battery bracket 710 is located in the accommodating cavity 100a, one end of each of the two electrode elastic pieces 720 may elastically abut against a positive electrode and a negative electrode of the battery 730, and the other end of each of the two electrode elastic pieces 720 may be electrically connected to the control board assembly 200 (e.g., the second circuit board 310) via the wire assembly.

On the one hand, using the second housing 120 as a mounting carrier for the battery assembly 700, by dispersing the components of the battery assembly 700 (i.e., the battery bracket 710 and the electrode elastic piece 720) in the second housing 120, the structural space of the second housing 120 or the housing assembly 100 may be fully utilized, which is conducive to realizing the lightweight and miniaturization design of the wearable device.

On the other hand, by utilizing the structural feature that the battery bracket 710 may be transferred out of the housing assembly 100 via the battery window 120h, the battery 730 may be easily replaced. After the battery bracket 710 is transferred into the accommodating cavity 100a, it may adapt to the structural form of the battery window 120h to realize the closure of the battery window 120h, thereby maintaining the structural integrity of the outer contour of the main body of the wearable device.

It should be noted that the description of the battery 730 is introduced in the present embodiment solely for the purpose of understanding the structural construction and functional principles of the battery bracket 710 and does not mean that the battery 730 is necessarily a component of the battery assembly 700. That is, in some embodiments, the battery 730 may be an integral component of the battery assembly 700; in other embodiments, the battery 730 may also be a consumable used in conjunction with the wearable device.

In some embodiments in which the housing assembly 100 adopts the mimetic structure, the length trajectory of the battery window 120h is roughly an arc segment, as the battery window 120h is equivalent to a strip window provided through the second side wall and the fourth side wall of the housing assembly 100. Thus, the battery bracket 710 may be set as the curved shape that is well adapted to the battery window 120h, and the closure of the battery window 120h is realized with the aid of the battery bracket 710, thereby ensuring the integrity of the structural shape of the outer contour of the main body of the wearable device.

In other embodiments, the battery bracket 710 may also be in other structural forms. For example, the battery bracket 710 may be provided in a cover structure that is substantially the same as or matches the structural form of the battery window 120h, and the battery 730, as a detachable form, is placed on the second housing 120 and in the accommodating cavity 100a, and the battery window 120h may be opened or closed by assembling and disassembling the battery bracket 710, which facilitates the replacement of the battery 730.

In some embodiments, each of the battery bracket 710, the first housing 110, and the second housing 120 is a one-piece structure made of PI. As a result, the battery bracket 710 and the housing assembly 100, as parts capable of contacting the human skin, may have good biocompatibility and stable structural strength. The materials of various parts of the main body of the wearable device are to be more consistent, which also facilitates the processing and fabrication and the structural coordination of the related parts.

The above specific examples applied to illustrate the present disclosure are only used to assist in understanding the present disclosure and are not intended to limit the present disclosure. For a person skilled in the art to which the present disclosure belongs, various simple deductions, deformations, or substitutions may also be made based on the ideas of the present disclosure.

## Claims

1. A wearable device, comprising:
a housing assembly, including a first housing and a second housing, wherein the first housing is connected to the second housing to enclose an accommodating cavity between the first housing and the second housing; and
a movement assembly provided in the accommodating cavity, wherein the movement assembly includes a first assembly and a second assembly in electrical connection with the first assembly, the first assembly is connected to the first housing, and the second assembly is connected to the second housing.

2. The wearable device of claim 1, wherein the first assembly is connected to an inner wall of the first housing, and the second assembly is connected to an inner wall of the second housing.

3. The wearable device of claim 1, wherein the first housing is a one-piece structure made of polyimide (PI), and/or the second housing is a one-piece structure made of PI.

4. The wearable device of claim 1, wherein the first housing is provided with a package assembly between the first housing and the second housing, and the package assembly is configured to fix the first housing and the second housing.

5. The wearable device of claim 4, wherein the package assembly includes a first fixing structure, the first fixing structure includes a support arm and a fixing pin, one of the first housing and the second housing is a one-piece structure with the support arm; and the fixing pin is provided through another of the first housing and the second housing to fix the first housing and the second housing; and/or
the package assembly includes a first positioning structure, the first positioning structure includes a first positioning protrusion and a first positioning groove, one of the first housing and the second housing is a one-piece structure with the first positioning protrusion, and the first positioning groove is formed in another of the first housing and the second housing; and the first positioning protrusion is aligned and inserted in the first positioning groove to limit a relative position of the first housing to the second housing.

6. The wearable device of claim 5, wherein the package assembly includes the first fixing structure and the first positioning structure, the housing assembly includes a first end and a second end that are opposite to each other in a first direction, the first fixing structure is located on the first end of the housing assembly, and the first positioning structure is located on the second end of the housing assembly.

7. The wearable device of claim 6, wherein the first housing and the second housing are opposite to each other in a second direction; the support arm protrudes out of a side of the second housing facing the first housing, the fixing pin is provided through the first housing and the support arm in a third direction, and the first positioning protrusion protrudes out of a side of the first housing facing the second housing, wherein any two of the first direction, the second direction, and the third direction intersect with each other.

8. The wearable device of claim 1, wherein a surface where the first housing connects against the second housing is a joint surface, a first limiting structure is provided between a joint surface of the first housing and a joint surface of the second housing, and the first limiting structure is configured to limit the first housing and/or the second housing from deforming.

9. The wearable device of claim 8, wherein the joint surface of the first housing and the joint surface of the second housing contact against each other in a second direction, and the first limiting structure includes a first limiting flange and a second limiting flange, wherein
the first limiting flange protrudes out of the joint surface of the first housing towards a side where the second housing is located, and the second limiting flange protrudes out of the joint surface of the second housing towards a side where the first housing is located; the first limiting flange and the second limiting flange abut against each other in a third direction to limit deformation of the first housing or the second housing in the third direction; and the second direction and the third direction intersect.

10. The wearable device of claim 9, wherein the first limiting flange is located on a side of the second limiting flange that is opposite to the accommodating cavity in the third direction, and the second limiting flange is provided with an avoidance structure configured to avoid the movement assembly; or
the first limiting flange is located on a side of the second limiting flange facing the accommodating cavity in the third direction, and the first limiting flange is provided with an avoidance structure configured to avoid the movement assembly.

11. The wearable device of claim 8, further comprising a plurality of the first limiting structures, and the plurality of the first limiting structures are provided on two opposite sides of the accommodating cavity.

12. The wearable device of any one of claims 1-11, wherein the first assembly includes a microphone assembly and a control board assembly, and the microphone assembly and the second assembly are electrically connected to the control board assembly, respectively, wherein
the microphone assembly is fixedly connected to an inner wall of the first housing for picking up an external sound signal from the housing assembly, and the control board assembly is fixedly connected to the inner wall of the first housing for receiving the external sound signal picked up by the microphone assembly.

13. The wearable device of claim 12, wherein the microphone assembly includes a first circuit board, the control board assembly includes a second circuit board, an end of the first circuit board in a length direction is fixedly connected to the inner wall of the first housing, and another end of the first circuit board in the length direction is fixedly connected to the second circuit board; and the second circuit board is fixedly connected to the inner wall of the first housing, and a material hardness of the first circuit board is less than a material hardness of the second circuit board.

14. The wearable device of claim 12, wherein the microphone assembly includes a microphone electrically connected to the control board assembly, the first housing includes a sound pickup hole, the sound pickup hole connects the accommodating cavity to an exterior of the housing assembly; and the microphone is in sealed communication with the sound pickup hole to pick up the external sound signal input through the sound pickup hole.

15. The wearable device of claim 12, wherein the first assembly further includes a button assembly; the button assembly is movably connected to the inner wall of the first housing by at least partially exposing to the housing assembly; and the button assembly is configured to cooperate with the control panel assembly to input a preset command.

16. The wearable device of claim 15, wherein the first housing includes a button window, the button window connects the accommodating cavity to an exterior of the housing assembly; the button assembly includes an operating button; the operating button is movably connected to the inner wall of the first housing by at least a portion of the button window protruding out of the first housing; and the control board assembly is located on a side of the operating button that is opposite to the button window to cooperate with the operating button to input the preset command.

17. The wearable device of claim 16, wherein each of the operating button, the first housing, and the second housing is a one-piece structure made of PI.

18. The wearable device of any one of claims 1-11, wherein the second assembly includes a battery assembly and/or an interface assembly; the battery assembly is connected to an inner wall of the second housing and electrically connected to the first assembly for supplying power; and the interface assembly is fixedly connected to the inner wall of the second housing and electrically connected to the first assembly for connecting to an external device.

19. The wearable device of claim 18, wherein the battery assembly includes a battery bracket for accommodating a battery, the second housing includes a battery window, and the battery window connects the accommodating cavity and an exterior of the housing assembly; and the battery bracket is movably connected to the inner wall of the second housing to enable the battery bracket to close and open the battery window.

20. The wearable device of claim 19, wherein each of the battery bracket, the first housing, and the second housing is a one-piece structure made of PI.

21. The wearable device of claim 18, wherein the interface assembly includes an interface member and a fixing member, the second housing and/or the first housing includes a connection port that connects the accommodating cavity to the exterior of the housing assembly; the interface member is arranged in the accommodating cavity by directly opposite to the connection port for connecting to the external device; and the fixing member is in fit connection with the inner wall of the second housing to fix the interface member in the accommodating cavity.

22. The wearable device of claim 21, wherein each of the fixing member, the first housing, and the second housing is a one-piece structure made of PI.

23. The wearable device of any one of claims 1-11, wherein
the first assembly includes a microphone assembly, a control board assembly, and a button assembly,
the second assembly includes a battery assembly and an interface assembly,
the microphone assembly, the interface assembly, and the battery assembly are electrically connected to the control board assembly, respectively, wherein
the housing assembly includes a first side wall, a second side wall, a third side wall, a fourth side wall, a fifth side wall, and a sixth side wall enclosing the accommodating cavity;
the first side wall and the second side wall are opposite to each other in the first direction;
the third side wall and the fourth side wall are opposite to each other in the second direction and connects between the first side wall and the second side wall;
the fifth side wall and the sixth side wall are opposite to each other in the third direction and connects between the first side wall, the second side wall, the third side wall, and the fourth side wall;
the first direction, the second direction, and the third direction intersect with each other;
the microphone assembly and the control board assembly are arranged side by side along the first direction;
the microphone assembly and the control board assembly are fixed to the third side wall, respectively;
the microphone assembly is configured to pick up a sound signal from an exterior of the housing assembly;
the control board assembly is configured to receive the sound signal picked up by the microphone assembly;
the button assembly is movably connected to the first housing by at least partially exposing to the first housing,
the button assembly is located on a side of the control board assembly facing the third side wall in the second direction;
the button assembly and the control board assembly cooperate to input a preset command;
the interface assembly is configured to connect to an external device;
the interface assembly is fixed to the fourth side wall and exposed to the second housing from at least one of the fifth side wall, the sixth side wall, or the first side wall;
the battery assembly is configured to supply power; and
the battery assembly is movably connected to the second housing and is capable of entering and exiting the accommodating cavity at a position of the fourth side wall close to the second side wall in the first direction.

24. The wearable device of claim 23, wherein the first assembly includes two microphone assemblies, the two microphone assemblies are spaced apart in the first direction, and the button assembly and the control board assembly are located between the two microphone assemblies in the first direction.

25. The wearable device of claim 24, wherein the third side wall is a curved structure protruding toward the exterior of the housing assembly in the second direction, and the third side wall includes a preset length in the first direction;
the third side wall is provided with a button window and two sound pickup holes, and the button window is located between the two sound pickup holes in the first direction, wherein
the two sound pickup holes correspond one-to-one with and are in sealed communication with sound inlet ends of the two microphone assemblies;
the button assembly is rotationally connected to the first housing, and one of two ends of the button assembly that are opposite to each other in the first direction is capable of protruding out of the first housing via the button window.

26. The wearable device of claim 23, wherein the second assembly includes a plurality of interface assemblies, the plurality of interface assemblies include a first interface assembly and a second interface assembly, wherein
the first side wall is provided with a first connection port connecting the accommodating cavity and the exterior of the housing assembly;
the first interface assembly is fixed to the fourth side wall by facing the first connection port in the first direction for connecting an in-ear speaker;
the fifth side wall or the sixth side wall is provided with a second connection port connecting the accommodating cavity and the exterior of the housing assembly; and
the second interface assembly is fixed to the fourth side wall by facing the second connection port in the third direction for connecting an external regulating device.

27. The wearable device of claim 26, further comprising an in-ear speaker, wherein the in-ear speaker includes a speaker assembly and a wearable assembly, and an end of the wearable assembly passes through the first connection port to be connected to the first interface assembly, and another end of the wearable assembly is connected to the speaker assembly; and
the wearable assembly is configured to hook the housing assembly to an ear of a user to allow the speaker assembly to be inserted into an ear canal of the user.

28. The wearable device of claim 23, wherein a dimension of the housing assembly in the first direction is greater than a dimension of the housing assembly in the second direction and a dimension of the housing assembly in the third direction, and a geometric centerline of the housing assembly in the first direction is an arcuate segment.

29. The wearable device of claim 28, wherein the dimension of the housing assembly in the third direction progressively decreases from a side where the second side wall is located toward a side where the first side wall is located.

30. The wearable device of any one of claims 1-29, further comprising an in-ear speaker, wherein the in-ear speaker includes a speaker assembly and a wearable assembly, and the wearable assembly is connected between the housing assembly and the speaker assembly; and
the housing assembly is capable of being worn between a dorsal side of an ear of a user and the head of the user, and the speaker assembly is capable of being inserted in an ear canal of the user.

31. The wearable device of any one of claims 1-24, wherein the wearable device is an air-conduction hearing aid.
